(19) Europäisches Patentamt / European Patent Office / Office européen des brevets

(11) **EP 2 860 510 A1**

(12) **EUROPEAN PATENT APPLICATION**
published in accordance with Art. 153(4) EPC

(43) Date of publication:
**15.04.2015 Bulletin 2015/16**

(21) Application number: **13799778.9**

(22) Date of filing: **04.06.2013**

(51) Int Cl.:
**G01N 15/02** (2006.01)     **G01N 1/02** (2006.01)
**G01N 27/60** (2006.01)

(86) International application number:
**PCT/JP2013/065503**

(87) International publication number:
**WO 2013/183652 (12.12.2013 Gazette 2013/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.06.2012   JP 2012128814**

(71) Applicant: **Shimadzu Corporation**
**Kyoto 604-8511 (JP)**

(72) Inventor: **OKUDA Hiroshi**
**Kyoto-shi**
**Kyoto 604-8511 (JP)**

(74) Representative: **Webster, Jeremy Mark et al**
**Mewburn Ellis LLP**
**33 Gutter Lane**
**London EC2V 8AS (GB)**

(54) **FINE PARTICLE CLASSIFICATION MEASUREMENT DEVICE, SAMPLE CREATION DEVICE WITH UNIFORM PARTICLE CONCENTRATION, AND NANOPARTICLE FILM FORMING DEVICE**

(57)     An electrifier is disposed on an entrance side of a parallel channel in which sample gas flowing therein can form a laminar flow. The electrifier includes a discharge electrode to electrically charge fine particles in the sample gas. One or more attraction electrodes are disposed, on one face of a pair of opposed faces of the channel, downstream of the electrifier along a channel direction at locations at different distances from one another from the entrance of the channel. A classification electrode is disposed on the other face of the pair of opposed faces of the channel. The classification electrode is disposed facing the attraction electrode(s), and generates, between the attraction electrode(s) and the classification electrode, an electric field that attracts electrically-charged fine particles in the sample gas flowing in the channel, toward the attraction electrode(s).

## Fig. 1

**Description**

TECHNICAL FIELD

The present invention relates to a fine particle measurement device suitable for use in monitoring a nanoparticle concentration in automobile exhaust gas, in building hygiene management, in occupational health and safety management and the like, and more particularly to a fine particle classification measurement device that classifies fine particles according to particle size and performs measurement, to a sample creation device with a uniform particle concentration, and to a nanoparticle film forming device.

BACKGROUND ART

One known device for counting the number of particles having small particle sizes from several nanometers (nm) to some tens of nanometers is a condensation particle counter (CPC), which condenses vapor of working fluid, such as water or butanol, around a particle as a nucleus, thereby increases the size of fine particles, to which light is emitted to detect the number of scattered light pulses at a particular scattering angle, and thus, measures concentration of the number of fine particles.

On the other hand, for particles having a larger particle size ranging from 300 nm to several micrometers, an optical particle counter and a dust monitor are known, each which emits light to fine particles, and detects the number of scattered light pulses, scattered light intensity, or transmitted light intensity at a particular scattering angle, thereby measures the fine particle size or concentration of the number of fine particles. These devices differ from each other in terms of fine particle size to be measured.

Moreover, for fine particles having a small particle size on the order of nanometers, a differential mobility analyzer (DMA) or an integral mobility analyzer is known as an analyzer having a classification mechanism that classifies the fine particle size. A classification mechanism used is one that introduces sample gas from a sidewall of a classification section, and sucks out gas containing fine particles segregated as having a desired particle size from a sidewall of the classification section (see Patent Documents 1 to 5, and Non-Patent Documents 1 and 2).

Shape observation of nanomaterial by a transmission electron microscope (TEM), a scanning electron microscope (SEM), an atomic force microscope (AFM), or a similar device, and qualitative and quantitative analysis for each particle size by gas chromatograph-mass spectrometer (GC-MS), by inductively coupled plasma-mass spectrometer (ICP-MS), or by a similar device, are important for toxicity evaluation thereof, or for identifying the emission source. To prepare a sample for such analysis, an impactor is used as a device for collecting aerosol on a collection plate. An impactor collects aerosol on a collection plate by utilizing inertial collision of aerosol ejected from a nozzle. The particle size of collected aerosol is adjusted by flow rate of air sucked for ejection from the nozzle, or the nozzle diameter.

However, in an impactor, a pressure loss generated across the nozzle causes a pressure stress applied on sample particles. This process may cause component particles having a low boiling point to evaporate. Moreover, since this method collects, on a collision plate, particles ejected at a high speed from a nozzle having a small bore diameter, concentration of collected particles is inevitably high in front of the nozzle, and decreases with distance from the front. In addition, distribution inevitably depends on the particle size in that larger-sized particles are collected in a small area in front of the nozzle, while smaller-sized particles disperse in a relatively wide area.

A technology has been practically used for forming a nanoparticle film formed of nanoparticles having particle sizes from several nanometers to a little over ten nanometers, and for applying such a film in a projection lens for IC exposure light source as a low refractive index film. In such a nanoparticle film, thickness uniformity of the film is important for preventing distortion in a projected image.

A nanosized catalyst, which has been studied for application to fuel cells and secondary cells, is produced by adding nanosized catalyst particles to a polymer electrolyte membrane. A nanosized catalyst is expected to improve catalyst efficiency by reducing the particle size of catalyst particles down to nanosize. In order to improve overall utilization efficiency of nanosized catalyst, uniform dispersion of catalyst particles is needed. A production process of such a nanosized catalyst requires a method of forming a film, in which the electrolyte membrane is not damaged by kinetic energy, heat, and the like, of the catalyst particles during addition of catalyst to the electrolyte membrane. A wet processing, such as a conventionally-used spin-coating technique, cannot correct non-uniform distribution of particles, nor can a dry processing, such as deposition, sputtering, etc., avoid damage to the membrane.

PRIOR ART DOCUMENTS

PATENT DOCUMENTS

Patent Document 1: US 2005/0162173 A
Patent Document 2: US 6,230,572
Patent Document 3: US 6,828,794
Patent Document 4: US 6,230,572
Patent Document 5: US 6,787,763

NON-PATENT DOCUMENTS

Non-Patent Document 1: Chen, D-R, D. Y. H. Pui, D. Hummes, H. Fissan, F. R. Quant, and G. J. Sem, [1998], "Design and Evaluation of a Nanometer Aerosol Differential Mobility Analyzer (Nano-DMA), Journal of Aerosol Science 29/5:497-509.
Non-Patent Document 2: Fissan, H. J., C. Helsper, and H. J. Thielen [1983], "Determination of Particle Size Distribution by Means of an Electrostatic Classifier." Journal of Aerosol Science, 14:354.
Non-Patent Document 3: Journal of the Society of Powder Technology, Japan, Vol. 22, No. 4, pp.231-244 (1985).

SUMMARY OF THE INVENTION

PROBLEMS TO BE SOLVED BY THE INVENTION

Classification by using a DMA is one in which an electric field is applied perpendicularly to a sheath gas flow, creating an electrostatic suction force that causes electrically-charged (hereinafter also referred to simply as "charged") fine particles to flow across the sheath gas flow, and the charged fine particles encounter resistance dependent on the particle size during movement toward a counter electrode, and are thus classified. Need for a sheath gas flow necessarily leads the configuration and control of the device to be both complex and expensive.

In addition, since the particle size resolution depends on a quotient of the sheath gas flow rate divided by the sample flow rate, an increase in the sample flow rate aiming at an increase in the signal magnitude is finite.

Moreover, a Faraday cup amperemeter, which is an inexpensive fine particle counter used for this process, can provide reliable measurement only on fine particle concentration that provides a current value obtained by collected charged fine particles of several tens of femtoamperes (fA) or more. Accordingly, an expensive condensation particle counter is used for measurement of low fine particle concentration.

An optical particle counter, which is another measurement device, is less expensive than a DMA, but cannot count fine particles having particle sizes less than or equal to 300 nm.

A first object of the present invention is to enable detection of charged particles in a well-defined electrical mobility range by a particular measurement electrode without using a sheath flow as in a DMA.

A sample for shape observation or qualitative and quantitative analysis of nanomaterial may have distribution in such a way that particles having a particular particle size are present in one region, may have only a particular component of the particles evaporated during a sampling process, or may have the particles damaged to change in shape during a sampling process, for example. If the sample has such a bias or change in property, an analysis result fails to reflect reality. In addition, a quantitative understanding of a connection between the electrical mobility (which is a function of particle size) and the initial concentration of particles in a sampling process, that is, a quantitative understanding of a relationship between the electrical mobility and the concentration distribution, is essential for estimating an initial condition from an observation result or analysis result.

A second object of the present invention is to provide a device that produces a sample having a uniform particle concentration, and having a quantitatively distinct relationship with that particle concentration and the particle concentration in the initial space.

A third object of the present invention is to provide a uniformly-dispersed nanoparticle film suitable for use as a low refractive index film or nanosized catalyst, and to provide a nanoparticle film forming device suitable for adding catalyst to a polymer electrolyte membrane for fuel cell without causing damage thereto.

SOLUTIONS TO THE PROBLEMS

In order to achieve the first object, a fine particle classification measurement device of the present invention includes a parallel channel in which sample gas flowing inside can form a laminar flow. A blower mechanism is disposed on an exit or entrance side, preferably on an exit side, of the channel. The blower mechanism sucks the sample gas from an entrance of the channel, and is driven under a condition where the sucked sample gas flows in the channel as the laminar flow. An electrifier is disposed on the entrance side of the channel. The electrifier includes a structure for electrically charging the sample gas, such as a discharge electrode, a radiation source, an X-ray tube, etc., and electrically charges fine particles in the sample gas.

One or more attraction electrodes are disposed downstream of the electrifier on one face of a pair of opposed faces of the channel. The attraction electrodes are disposed along a channel direction at locations at different distances from one another from the entrance of the channel. The attraction electrodes each have a predetermined electrode width in the channel direction, and are electrically separated from each other. A classification electrode is disposed on the other face of the pair of opposed faces of the channel. The classification electrode is disposed facing the attraction electrode(s), and generates, between the attraction electrode(s) and the classification electrode, an electric field that attracts the electrically-charged fine particles in the sample gas flowing in the channel, toward the attraction electrode(s).

At least one of the attraction electrode(s) serves as a measurement electrode. The measurement electrode is connected with each galvanometer circuit, which measures amounts of charge of fine particles that have reached that measurement electrode.

The galvanometer circuit is connected to an operation unit. The operation unit calculates a quantity of fine particles resulting from classification of the electrically-charged fine particles that have reached the measurement electrode based on the amount of charge measured by the galvanometer circuit.

In one embodiment of the present invention, the attraction electrodes include two or more measurement electrodes. The measurement electrodes are respectively connected with the corresponding galvanometer circuits. The measurement electrodes are reached by electrically-charged fine particles in respectively different particle size ranges, and the amounts of charge of the electrically-charged fine particles that have reached the respective measurement electrodes are detected by the respective galvanometer circuits.

When the cross-sectional area of the channel is constant from the entrance to the exit, and if the widths of two of the n-th and the (n + 1)th measurement electrodes are the same in the flow direction, and the electrode widths are also the same in a direction perpendicular thereto, the areas of the electrodes are the same. In this case, tail heights on the larger particle-size side of the particle size distribution of the electrically-charged fine particles measured are the same. If the electrode widths, and hence the areas of the electrodes, differ from each other, the tail heights on the larger particle-size side of the particle size distribution can also be equated by correction of measured values of both electrodes to values per same area by means of an electrode area ratio, that is, multiplication of a measured value of one of the electrodes by the electrode area ratio.

Between the galvanometer circuit and the operation unit, a difference circuit may be further provided which calculates a difference between the measured signals of the respective galvanometer circuits of the two of the nth and the (n + 1)th measurement electrodes. This can cancel out the effects of electrically-charged fine particles on the larger particle-size side that reach both measurement electrodes, and can therefore provide measurement of electrically-charged fine particles reaching the n-th measurement electrode in more limited particle size range. In such a case, if adjustment has been made so that the tail heights on the larger particle-size side of the particle size distribution of the electrically-charged fine particles measured for two of the n-th and the (n + 1)th measurement electrodes are the same, the cancellation regarding the electrically-charged fine particles reaching both measurement electrodes can be accurately performed. Adjustment for equating the differences and the tail heights on the larger particle-size side by means of an electrode area ratio may be performed by an electric circuit or by a software operation.

In another embodiment of the present invention, the attraction electrodes include a trap electrode disposed at the most upstream location, and one or more measurement electrodes disposed at locations downstream thereof. The measurement electrodes are reached by electrically-charged fine particles in particle size ranges including respective predetermined particle sizes, while the trap electrode is reached by fine particles falling below these particle size ranges, and by electrically-charged fine particles exceeding these particle size ranges. The electrically-charged fine particles exceeding these particle size ranges are significantly affected by gravitational sedimentation, and therefore, such electrically-charged fine particles are removed from the sample gas flow by reaching the trap electrode, or by settling on a bottom face of the channel before reaching the trap electrode.

An electrification power source for applying a voltage to a discharge electrode of the electrifier may be one that can change the applied voltage. In such a case, changing by the electrification power source the electric field intensity due to the discharge electrode can modify the classification particle size range of the electrically-charged fine particles reaching the same measurement electrode.

If there is a plurality of measurement electrodes, a change in at least one of the locations and the electrode widths of the measurement electrodes, and the number of the measurement electrodes can change the classification particle size range measured by the same measurement electrode.

If there is only one measurement electrode, a change in at least one of the location and the electrode width of the measurement electrode can change the classification particle size range measured by the same measurement electrode.

A flow regulating mechanism, such as a flow regulating valve, may be provided in the blower mechanism. A change in sample gas flow rate by adjusting the flow regulating mechanism can change the classification particle size range of the electrically-charged fine particles reaching the same measurement electrode.

A classification power source applies a classification voltage to the classification electrode to generate an electric field that attracts the electrically-charged fine particles toward the attraction electrode(s) between the classification electrode and the attraction electrode(s). The classification power source may be one that can change the magnitude of the classification voltage. In such a case, changing the classification voltage can modify the classification particle size range of the electrically-charged fine particles reaching the same measurement electrode. In addition, the classification electrode may be divided into multiple sections along the channel, and electric fields of different intensity may be applied thereto to change the steps of the electrical mobility to be measured. For example, a low electric field may be applied to a section of the classification electrode on the entrance side to collect particles having a large electrical mobility with a small electrical mobility step, and a high electric field may be applied to a section of the classification electrode on the exit side to collect particles having a small electrical mobility with a large electrical mobility step.

In order to achieve the second object, a sample creation device of the present invention includes a parallel channel in which sample gas flowing therein can form a laminar flow, a blower mechanism configured to suck the sample gas from an entrance of the channel, and driven under a condition where the sucked sample gas flows in the channel as a laminar flow, an electrifier disposed on an entrance side of the channel, and configured to electrically charge fine particles in the sample gas, an attraction electrode disposed downstream of the electrifier along a channel direction on one face of a pair of opposed faces of the channel, the attraction electrode having a surface that serves as a mounting surface for a sampling collection substrate, and a classification electrode disposed on the other face of the pair of faces, facing the attraction electrode, the classification electrode being configured to generate, between the attraction electrode and the classification electrode, an electric field that attracts the electrically-charged particles in the sample gas flowing in the channel, toward the attraction electrode, thereby to collect the electrically-charged particles on the sampling collection substrate.

The sampling collection substrate is a substrate for collecting electrically-charged particles in the sample gas, and thereby producing a sample for chemical analysis and/or shape observation using a TEM, an SEM, a GC/ME, an ICP/MS, etc. The sampling collection substrate is, for example, a sheet of aluminum foil, a silicon substrate, a sapphire substrate, a TEM grid, an SEM sample table, or the like.

In order to achieve the third object, a nanoparticle film forming device of the present invention includes a parallel channel in which sample gas flowing therein can form a laminar flow, a blower mechanism configured to suck the sample gas from an entrance of the channel, and driven under a condition where the sucked sample gas flows in the channel as the laminar flow, an electrifier disposed on an entrance side of the channel, and configured to electrically charge fine particles in the sample gas, an attraction electrode disposed downstream of the electrifier along a channel direction on one face of a pair of opposed faces of the channel, the attraction electrode having a surface that serves as a mounting surface for a nanoparticle film forming substrate, and a classification electrode disposed on the other face of the pair of faces, facing the attraction electrode, the classification electrode being configured to generate, between the attraction electrode and the classification electrode, an electric field that attracts the electrically-charged particles in the sample gas flowing in the channel, toward the attraction electrode, thereby to deposit the electrically-charged particles on the nanoparticle film forming substrate.

The nanoparticle film forming substrate is, for example, a glass substrate for depositing electrically-charged particles in the sample gas thereon to form a nanoparticle film, a substrate on which a polymer electrolyte membrane for forming nanosized catalyst has been formed, or the like.

The channel, blower mechanism, electrifier, attraction electrode, and classification electrode of either a sample creation device or a nanoparticle film forming device of the present invention may be similarly configured to those of a fine particle classification measurement device of the present invention. However, neither a sample creation device nor a nanoparticle film forming device measures a quantity of fine particles resulting from classification of the electrically-charged fine particles, and thus, no measurement electrodes need to be selected from the attraction electrode(s), and neither the galvanometer circuit nor the operation unit for calculating a quantity of fine particles resulting from classification of the electrically-charged fine particles is needed.

The sampling collection substrate and the nanoparticle film forming substrate are each placed on a surface of the attraction electrode so as not to prevent the laminar flow, and not to disturb the electric field. Examples of a method for placing these substrates so as not to prevent the laminar flow, and not to disturb the electric field, include providing a recess in the attraction electrode, and disposing the substrate in the recess so that the substrate does not protrude into the channel; designing the attraction electrode so as to have a thickness reduced by the thickness of the substrate; or lowering the position of the attraction electrode from the channel by the thickness of the substrate so that the substrate covers the entire attraction electrode, thereby preventing the substrate from protruding into the channel. Thus, a configuration that does not disturb the laminar flow can be achieved.

EFFECTS OF THE INVENTION

A fine particle classification measurement device of the present invention forms a laminar flow of the sample gas containing electrically-charged fine particles, directs the laminar flow to a classification region, classifies the electrically-charged fine particles according to particle size, and performs detection by the measurement electrode having a predetermined electrode width. Accordingly, the fine particle classification measurement device can provide an advantage in that the measured particle size range of the electrically-charged fine particles detected by a particular measurement electrode is definite, and the number of the fine particles within that range can be counted.

In addition, having no moving parts except for the blower mechanism, and having a simple and robust structure, a fine particle classification measurement device of the present invention is characterized as being inexpensive, portable, and robust.

Moreover, since a fine particle classification measurement device of the present invention does not use a sheath flow as in a DMA, and thus, has no limitations on sample flow rate, a high sample flow rate may be used. Accordingly, if an amperemeter is used in the detector, a detection sensitivity of 10 particles/cc can be achieved.

In a nanoparticle film forming device of the present invention, external force exerted to the particles is only Coulomb force by the electric field and drag from the fluid. Therefore, as compared to cases of deposition and sputtering, kinetic energy of the particles is low, and thus, the substrate is only slightly damaged. As a classification sampling device for nanoparticles, the nanoparticle film forming device is less affected by evaporation of volatile components due to deformation and/or pressure reduction caused by collision impact by particles than devices using an aerodynamic classification method, such as an impactor, and therefore, maintains the initial condition. In addition, Equation (16) described below clearly shows a quantitative relationship between particle concentration per unit time, per unit area at a sampling point and particle concentration in the initial space, and therefore, initial particle size distribution can be calculated from a result of observation using a TEM, an SEM, or an AFM.

According to a nanoparticle film forming device of the present invention, a uniformly-dispersed nanoparticle film, and a nanoparticle film with catalyst added without causing damage to a polymer electrolyte membrane for fuel cell, can be obtained.

BRIEF DESCRIPTION OF THE DRAWINGS

Fig. 1 is a schematic perspective view illustrating one example of the present invention.

Fig. 2 is a graph of experimental values, complemented by literature values, showing a relationship between the particle size and the electrical mobility of fine particles electrically charged by unipolar charging in one example.

Fig. 3 is a conceptual graph illustrating a movement trajectory of a charged fine particle when a laminar flow of sample gas has entered a classification electric field.

Fig. 4 is a graph illustrating relationships between the applied electric field intensity applied (hereinafter referred to simply as "applied electric field intensity") and current densities detected by electrodes disposed at different locations with respect to the entrance according to one example.

Fig. 5 is a graph illustrating a relationship between concentration of the number of introduced particles and a detection signal under a constant applied electric field intensity in that example.

Fig. 6 is a graph of experimental values, complemented by literature values, showing a relationship between the particle size and the electrical mobility (particle concentration), and a relationship between the particle size and the detected current value (sensitivity) per 1000 particles/cc, of fine particles electrically charged by unipolar charging in one example.

Fig. 7 is a graph illustrating particle size ranges provided by differential signals of measurement electrodes in one example.

Fig. 8 is a graph illustrating relationships between the particle sizes of the charged fine particles captured by the measurement electrodes and the capture ratios of the respective electrodes, and the particle size range provided by a differential signal of the first and the second electrodes in a two-stage electrode type device in one example.

Fig. 9 is a graph illustrating relationships between the particle sizes of the charged fine particles captured by the measurement electrodes and the capture ratios of the respective electrodes in an eight-stage electrode type device in one example.

Fig. 10 is a graph illustrating particle size ranges provided by differential signals between the measurement electrodes for the same eight-stage electrode type device.

Fig. 11A is a block diagram illustrating a first example of an operation unit applied to one example.

Fig. 11B is a block diagram illustrating a second example of the operation unit applied to one example.

Fig. 12 is a schematic perspective view illustrating another example of the present invention.

Fig. 13 is a graph of experimental values, complemented by literature values, showing a relationship between the particle size and the electrical mobility of fine particles electrically charged by unipolar charging in that example.

Fig. 14 is a graph illustrating a wind speed profile (a) of the sample gas in the classification section, and movement trajectories (other than "a") of the charged fine particles in that example.

Fig. 15 is a graph illustrating a relationship between the particle size of the charged fine particles and the capture ratio associated with the measurement electrode in that example.

Fig. 16 is a graph of experimental values, complemented by literature values, showing a relationship between the particle size and the average valence of fine particles electrically charged by unipolar charging, and a relationship between the particle size and the particle density of particles captured per unit time per unit area of a measurement electrode when the particle concentration in each particle size is 1000 particles/cc in the example shown in Figs. 18 to 20.

Fig. 17 is a conceptual diagram of value determination of a device of the present invention by using a reference particle size distribution measurement device.

Fig. 18 is a system diagram for a still another example.

Fig. 19A is a schematic top cross-sectional view in that example.

Fig. 19B is a schematic front cross-sectional view in that example.

Fig. 20 is a cross-sectional view along the channel according to that example.

Fig. 21 is a cross-sectional view illustrating an area around the attraction electrode according to examples of a sample creation device and of a nanoparticle film forming device.

EMBODIMENTS OF THE INVENTION

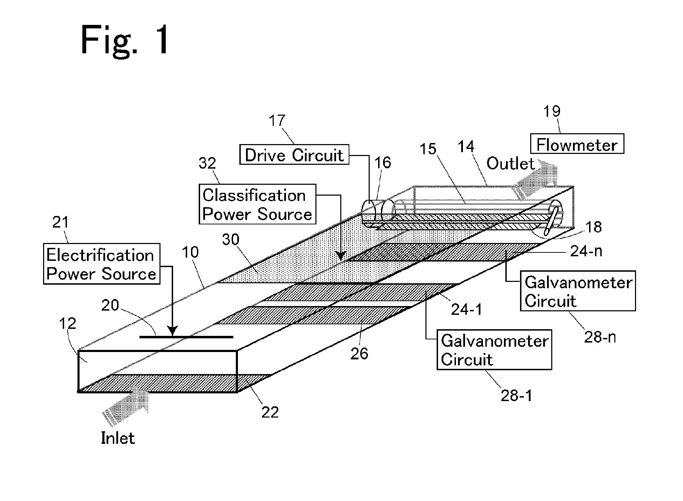

Fig. 1 schematically illustrates one example of the fine particle classification measurement device of the present invention. A channel 10 has openings in an entrance 12 and in an exit 14, and has a flattened rectangular cross section in both the flow direction and the channel width direction, thus, forming a flattened shape. The dimension and the shape of the channel is not particularly limited, but the channel has a shape, for example, of a flattened rectangular parallelepiped having a vertical size (height) of 4 mm, a horizontal size (channel width) of 250 mm, and a depth (channel length) of 450 mm.

A fan 15 is disposed, as a blower mechanism, on an exit 14 side of the channel 10 for sucking a sample. A motor 16 for rotating the fan 15 is driven by a drive circuit 17. A manual butterfly valve is provided as a flow regulating valve 18 on the sample gas suction side of the fan 15. Adjusting the flow regulating valve 18 can change the sample gas flow rate. The fan 15, which provides uniform suction across the entire width of the channel 10, allows the sample gas to be sucked from the entrance 12 of the channel 10. The fan 15 is driven under a condition where the sucked sample gas flows in the channel 10 as a laminar flow. A condition where a laminar flow is formed is one in which Reynolds number is generally less than or equal to 2000.

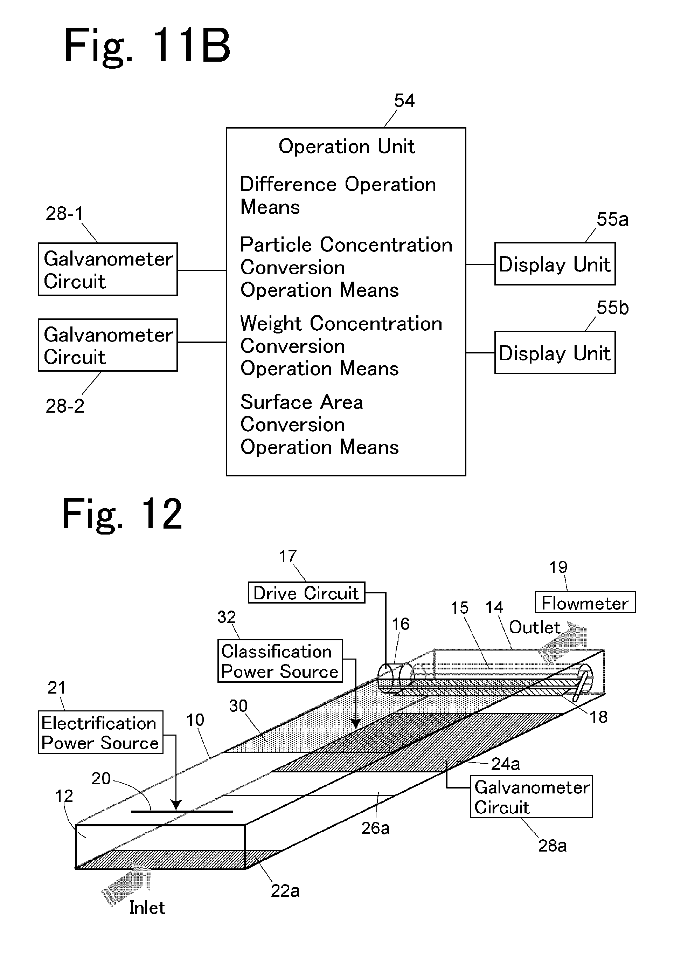

A flowmeter 19 for measuring the flow rate of the sample gas flowing in the channel is provided downstream of the fan 15 on the exit side of the channel 10. Although the flowmeter 19 may be disposed either on the entrance side or on the exit side of the channel 10, the flowmeter 19 is preferably disposed on the exit side as in this example or in the example of Fig. 12 described below considering the adhesion of particles in the sample gas also to the flowmeter 19.

An electrifier for electrically charging the fine particles in the sample gas is disposed in the vicinity of the entrance of the channel 10. In this example, the electrifier is configured so as to have a unipolar charging configuration. The electrifier includes a wire-like discharge electrode 20, attached on one side of the channel 10, and a counter electrode 22, disposed on the other side of the channel 10 facing the discharge electrode 20 with the channel 10 sandwiched therebetween. In order to produce a discharge between the discharge electrode 20 and the counter electrode 22, an electrification power source 21 is connected to the discharge electrode 20. The shape of the discharge electrode 20 is not limited to a wire-like shape, but may be one or more needles attached perpendicularly to the counter electrode 22. All that is required is that a discharge is produced between the discharge electrode 20 and the counter electrode 22.

A pair of opposed wide bottom faces (in this example, top face and lower bottom face) of the channel 10 are parallel to each other, and have the same area. On the lower bottom face, which is one of the bottom faces, a plurality of attraction electrodes 24, 26 are disposed at locations at different distances from one another from the entrance 12 along the channel direction. The attraction electrodes 24, 26 each have a predetermined electrode width in the channel direction, and are electrically separated from each other. The attraction electrodes 24, 26 include measurement electrodes 24-1 to 24-n (the symbols in the measurement electrodes 24-1 to 24-n may be hereinafter collectively referred to simply as "24". A similar notation is also applicable to galvanometer circuits 28.) and a trap electrode 26. The measurement electrodes 24-1 to 24-n are respectively connected with galvanometer circuits 28-1 to 28-n to detect the amounts of charge of fine particles that have reached the measurement electrodes. The measurement electrodes 24-1 to 24-n may be disposed close to each other, or may be disposed spaced apart from each other as in the illustrated example. Although no galvanometer circuit is connected to the trap electrode 26, a galvanometer circuit may be connected thereto if measurement for an ultrafine particle size is desired. Attraction electrodes adjacent to each other are electrically separated from each other by interposing an insulation member therebetween, or via an air layer. Such an insulation member only needs to electrically separate the electrodes, and thus, does not need to be made thick. For example, a thickness of about 0.5 mm is sufficient. Obviously, however, this thickness depends on volume resistivity of the insulation member.

A classification electrode 30 is disposed on a top face, which is the other bottom face of the pair of opposed wide bottom faces of the channel 10, facing the attraction electrodes 24, 26. The classification electrode 30 generates, between the attraction electrodes 24, 26 and the classification electrode 30, an electric field that attracts charged fine particles in the sample gas flowing in the channel 10, toward the attraction electrodes.

In order to arrange this electric field perpendicular or generally perpendicular to the flowing direction of the sample gas that flows in the channel 10, it is preferable that the area of the classification electrode 30 and the total area of the attraction electrodes 24, 26 be generally the same, and that the classification electrode 30 and the attraction electrodes 24, 26 be spatially arranged directly across from each other as well. Therefore, while the attraction electrodes 24, 26 are electrically separated from each other, a smaller spacing between adjacent attraction electrodes 24, 26 is preferred. The attraction electrodes 24, 26 may include only measurement electrodes 24 that measure the amounts of charge of the charged fine particles that have reached, but as in this example, a trap electrode 26 may be included which charged fine particles reach, but is not used as a measurement electrode. If the trap electrode 26 is included, the same potential as that of the measurement electrodes 24 is applied also to the trap electrode 26 in order to allow an electric field to act in a perpendicular or generally perpendicular direction to the flowing direction of the sample gas that flows in the channel 10. Here, the same potential includes ground potential.

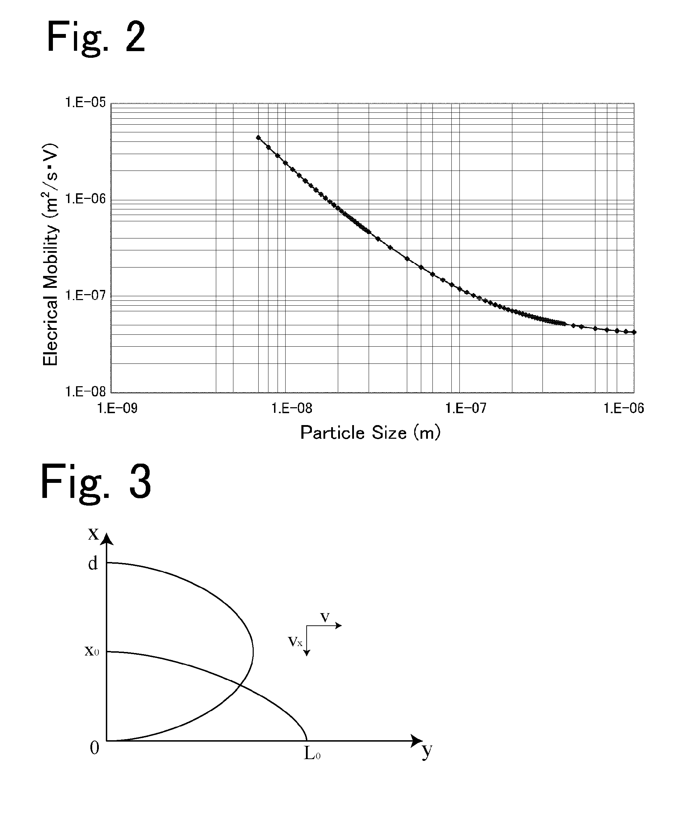

In this example, one trap electrode 26 is disposed on the entrance side of a first measurement electrode 24-1, which is located closest to the entrance of the channel, of the measurement electrodes 24. The front edge location on the entrance side of the trap electrode 26 and the front edge location on the entrance side of the classification electrode 30 are positioned so as to align with each other in the channel direction (y-direction in Fig. 3), and this front edge location is the base point of the classification region (the location at y = 0 in Fig. 3). In the description hereinafter, identification of locations and widths of the measurement electrodes 24 is made as distances from this base point of the classification region. The area between the classification electrode 30 and the attraction electrodes 24, 26 is the classification region. The distance from the entrance of the channel to the base point of the classification region is referred to as run-up distance. The charged fine particles have not yet reached the classification region in the run-up distance, and therefore move with the sample gas flow without being affected by the classification electric field.

In this example, the measurement electrodes 24-1 to 24-n and the trap electrode 26 are at the same potential, and thus, an electric field is generated which is perpendicular or generally perpendicular to the flow of the sample gas that flows in the channel, between the classification electrode 30 and these electrodes. A classification power source 32 for applying a classification voltage is connected to the classification electrode 30. A voltage application by the classification power source 32 generates an electric field between the classification electrode 30 and the attraction electrodes 24, 26 in a direction in which the charged fine particles in the sample gas are attracted toward the attraction electrodes. For example, if the attraction electrodes 24, 26 are at ground potential, the classification power source 32 applies a voltage to the classification electrode 30 so that the voltage of the classification electrode 30 is a negative voltage when the charged fine particles are negatively charged, or so that the voltage of the classification electrode 30 is a positive voltage when the charged fine particles are positively charged.

For example, unipolar discharge with the counter electrode 22 at ground potential and with the discharge electrode 20 at a positive potential causes the fine particles in the sample gas to have a positive unipolar charge, and therefore, the measurement electrodes 24-1 to 24-n and the trap electrode 26 of the attraction electrodes are brought to ground potential, and the classification electrode 30 is brought to a positive potential.

In this example, when the fan 16 is operated during an operation of the electrifier and under the action of a classification electric field, sample gas is introduced from the entrance of the channel 10, and the fine particles contained in the sample gas are electrically charged by a discharge of the electrifier. The classification electric field is applied across the classification electrode 30 and the attraction electrodes 24, 26, and thus, the charged fine particles are sent into the classification electric field along with the sample gas flow. The fine particles electrically charged by the electrifier moves in the direction of sample gas flow before reaching the classification electric field, and when reaching the classification electric field, the fine particles start moving toward the attraction electrodes 24, 26 due to the classification electric field.

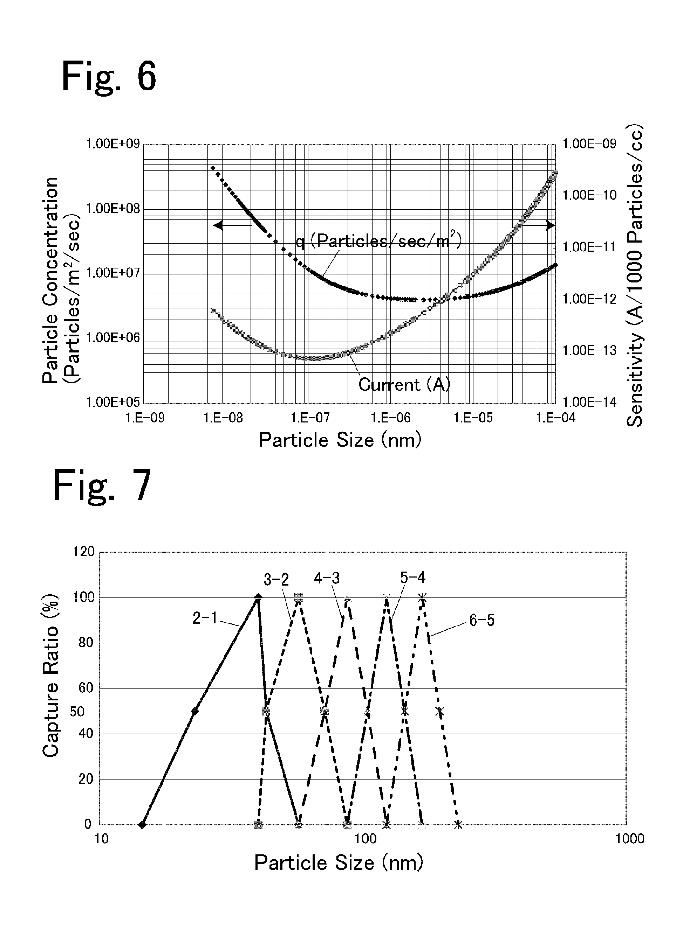

Here, a relationship between the particle size and the travel speed of fine particles in an electric field is discussed. If an electrification condition mainly of diffusion charging is provided, the amount of charge of fine particles is generally proportional to their particle sizes. A smaller fine particle has a small amount of charge, but air resistance thereto is also small, and therefore, when placed in an electric field, a charged fine particle is rapidly attracted by an electrostatic force, and moves accordingly in the electric field. In contrast, regarding a fine particle having a larger particle size, air resistance thereto is more dominant, and therefore, the travel speed in the electric field is lowered. Finally, a fine particle having an even larger particle size encounters increased air resistance, but at the same time, a larger amount of charge increases the effect of electrostatic force. As a result, the travel speed of a fine particle in an electric field does not change any more at or above a particular particle size. Fig. 2 illustrates a relationship between the particle size and movability in an electric field (electrical mobility). The data of Fig. 2 are actual values complemented by simulation based on literature values. Not only the data of Fig. 2, but also the data of Figs. 6 to 10 are data when electrification is performed by a device according to one example.

The charged fine particles are flowed along with a sample gas flow toward the exit, and at the same time, move toward the attraction electrodes in the electric field in the classification section. Smaller fine particles are captured more by attraction electrodes close to the entrance. However, larger fine particles sucked at a location closer to the attraction electrodes, that is, a location near the lower bottom face of the channel may also be captured by attraction electrodes close to the entrance. Charges of the fine particles that have reached the measurement electrodes 24-1 to 24-n of the attraction electrodes are detected by the galvanometer circuits 28-1 to 28-n connected to the respective measurement electrodes 24-1 to 24-n. Note that detection of the charged fine particles that have reached the measurement electrodes is not limited to detection by the galvanometer circuits 28-1 to 28-n, but other detection methods, such as, for example, weight measurement by means of a crystal oscillator, may be used for other examples.

Here, a calculation method for the ratio of charged fine particles that reach a measurement electrode (capture ratio) for each particle size will be described. The calculation model is as follows.

The sample gas in the channel 10 is flowed under a condition that the sample gas forms a laminar flow between the electrodes (between the classification electrode 30 and the attraction electrodes 24, 26). A speed profile under this condition is expressed by Equation (1):

$$v = f(x) \qquad (1)$$

where v is the sample gas flow velocity, and x is the distance along a direction perpendicular to opposing electrodes with respect to the lower bottom face of the channel.

Let y-direction denote the direction toward the exit of the channel with respect to the point, as a base point, at which the classification electric field starts acting along the channel 10, as shown in Fig. 3. A fine particle in this laminar flow moves at the speed v in the y-direction, and moves at a speed vx toward the attraction electrodes due to the classification electric field. The speed vx can be expressed by Equation (2) as the product of an electrical mobility Zp and the electric field intensity E of the classification electric field:

$$vx = ZpE \qquad (2)$$

Leaving the electrical mobility Zp aside for later discussion, the electric field intensity E is obtained by using the classification voltage V applied across the classification electrode and the attraction electrodes, and the interelectrode distance d as follows:

$$E = V/d \qquad (3)$$

Here, the time tx0 for a charged fine particle, having the electrical mobility Zp, located at an arbitrary position x0 in the x-direction at the base point (y = 0) at which the classification electric field starts acting, to reach an attraction electrode is expressed as follows:

$$tx0 = x0/vx$$
$$= x0d/ZpV \qquad (4)$$

The travel distance L0 in the y-direction when that charged fine particle reached an attraction electrode can be expressed as follows:

$$L_0 = t_{x0} \frac{1}{x_0} \int_0^{x_0} f(x)\, dx$$

$$= \frac{d}{Z_p V} \int_0^{x_0} f(x)\, dx \tag{5}$$

Here, the electrical mobility Zp is expressed as follows:

$$Z_p = NeC_c/3\pi\mu D_p \tag{6}$$

where N is the number of charge, e is the elementary charge, Cc is the Cunningham correction factor, $\pi$ is the ratio of a circle's circumference to its diameter (circular constant), $\mu$ is the viscosity coefficient, and Dp is the particle size. The viscosity coefficient $\mu$ and the Cunningham correction factor Cc are expressed by following Equations (7) to (10).

$$\mu = \mu_\gamma * \frac{T_{\gamma\mu} + S_\mu}{T + S_\mu} \left( \frac{T}{T_{\gamma\mu}} \right)^{\frac{3}{2}} \tag{7}$$

$$Cc = 1 + Kn \left\{ \alpha_c + \beta_c \exp\left( \frac{-\gamma_c}{Kn} \right) \right\} \tag{8}$$

$$Kn = \frac{2\lambda}{D_p} \tag{9}$$

$$\lambda = \lambda_\gamma * \frac{P_{\gamma\lambda}}{P} * \frac{T}{T_{\gamma\lambda}} * \frac{1 + \dfrac{S_\lambda}{T_{\gamma\lambda}}}{1 + \dfrac{S_\lambda}{T}} \tag{10}$$

Here, $\mu_\gamma$ is the reference viscosity coefficient, $T_{\gamma\mu}$ is the viscosity coefficient reference temperature (absolute temperature), $S_\mu$ is the viscosity coefficient reference Sutherland's constant, T is the temperature (absolute temperature), Kn is the Knudsen number, $\alpha c$, $\beta c$, and $\gamma c$ are constants, $\lambda$ is the mean free path, $\lambda_\gamma$ is the reference mean free path, $P_{\gamma\lambda}$ is the mean free path reference pressure, P is the pressure, $T_{\gamma\lambda}$ is the mean free path reference temperature (absolute temperature), and $S_\lambda$ is the mean free path reference Sutherland's constant.

According to the description provided above, since the electrical mobility Zp is a function of the particle size Dp of a charged fine particle, it is possible to obtain the travel distance L0 in the y-direction when charged fine particles having various particle sizes located at an arbitrary position x0 in the x-direction at the base point (y = 0) at which the classification electric field starts acting, reached an attraction electrode.

Assuming that concentration distribution of the particles having a particle size Dp at the entrance of the classification section is neglectable, the travel distance L of a particle sucked at a location x = 0, which is closest to the attraction electrodes, can be expressed as follows:

$$L = L_{min} = 0 \tag{11}$$

Meanwhile, the travel distance L of a particle sucked at a location x = d (d is the interelectrode distance), which is farthest from the attraction electrodes, can be expressed as follows:

$$L = L_{max} = \frac{d}{ZpV} \int_0^d f(x)\,dx \tag{12}$$

Here, letting Q denote the sample gas flow rate, and W denote the opening width of the entrance of the channel 10, there is a relationship:

$$Q = W \int_0^d f(x)\,dx \tag{13}$$

which then yields the following:

$$Lmax = Qd/WZpV \tag{14}$$

The particle concentration q per unit time and per unit area (particles/m2/sec) of particles captured by the attraction electrodes located from Lmin to Lo is expressed as follows:

$$q = QC \frac{\int_0^{x0} f(x)\,dx}{\int_0^d f(x)\,dx} \Big/ (Low) \tag{15}$$

This can be rewritten based on Equations (5) and (12) as follows:

$$q = (CZpV)/d \tag{16}$$

which suggests uniform distribution in a range $0 < xo < d$ irrespective of the location xo in the direction x perpendicular to opposing electrodes, that is, between particle travel distances Lmin and Lmax. Here, C is the particle concentration (particles/m3) of the particles having an electrical mobility Zp sucked into the device.

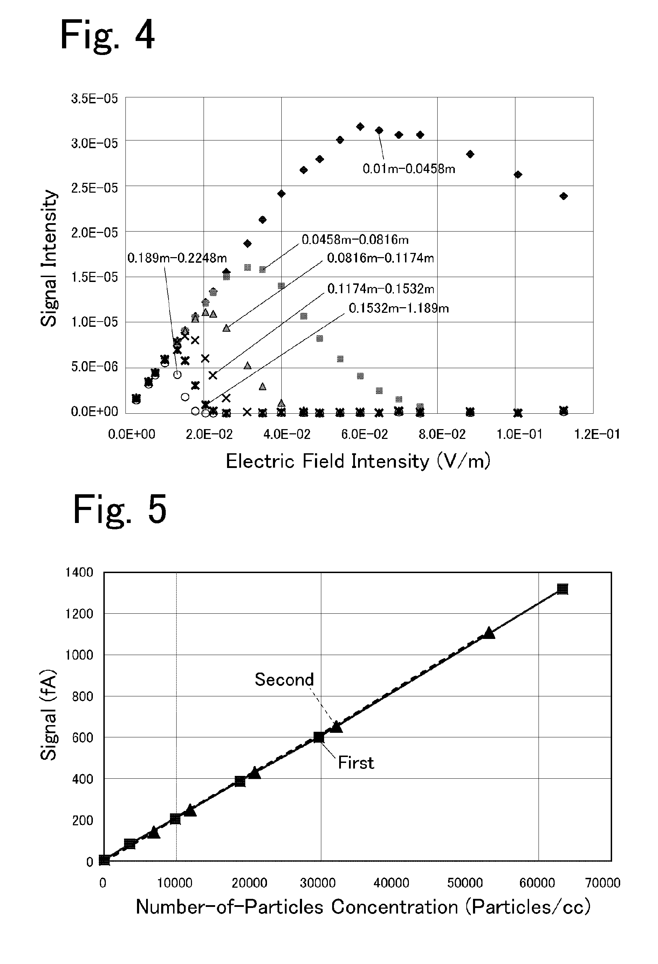

Validity of Equation (16) will now be demonstrated by actual measurement. Monodisperse particles having a particle size of 23 nm and a valence of 1, that is, having a constant electrical mobility were introduced into a device having the specifications of Table 1. The current density detected by each measurement electrode when the voltage is changed from 0 V to 400 V is shown in Fig. 4. The values in Fig. 4 each represent distances (in meters) of the entrance-side location and of the exit-side location of that measurement electrode from the base point of the classification region. For example, "0.01 m-0.0458 m" represents that the entrance-side location of that measurement electrode is located at a distance of 0.01 m from the base point of the classification region, and the exit-side location is located at a distance of 0.0458 m; and the difference thereof is the electrode width along the channel direction. The results of Fig. 4 show that current densities detected by electrodes disposed at locations at different distances from the classification section entrance increase along the same line in a certain range of the applied electric field intensity. A current density is represented here by a value per unit area of measurement electrode and per unit particle concentration at the entrance. In addition, as indicated by Equation (13), it is shown that the reaching distance of particles decreases with increase of the electric field intensity.

Furthermore, using the measurement device having the specifications of Table 1, particles having a particle size of 23 nm and a valence of 1 were introduced at a voltage of 400 V. With number-of-particles concentration of introduced particles varied, detection signals at the first measurement electrode (the measurement electrode closest to the entrance at 0.01 m-0.0458 m) were measured. The results are shown in Fig. 5. The detection signals exhibit linearity with respect to the number-of-particles concentration. Two measurements show a sufficient degree of reproducibility.

When the wind-direction length of an attraction electrode is L' (m), the measured current value satisfies a relationship:

$$I = CZpVNeL'/d$$

which indicates that attraction electrodes having the same length disposed between Lmin and Lmax yield the same magnitude of measured signals for a particle size Dp. In addition, since the signal magnitude is proportional to the length of electrode, effects of non-uniformity of electrode lengths can be eliminated by using the ratio thereof. Here, e is the elementary charge (c).

A graph of experimental values, complemented by literature values, showing a relationship between the particle size and the electrical mobility (particle concentration), and a relationship between the particle size and the detected current value (sensitivity) per 1000 particles/cc, of fine particles electrically charged by unipolar charging in one example is shown in Fig. 6.

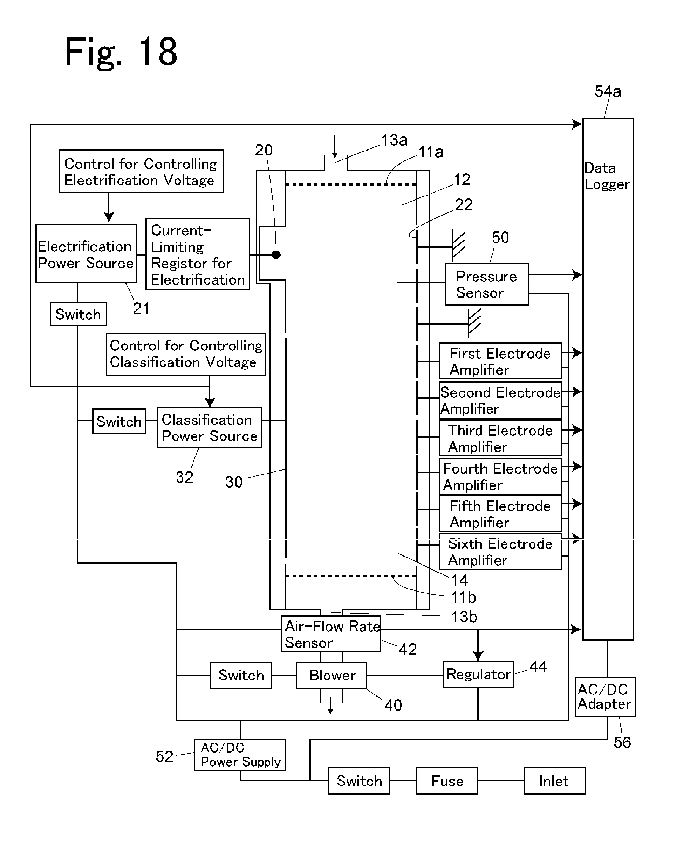

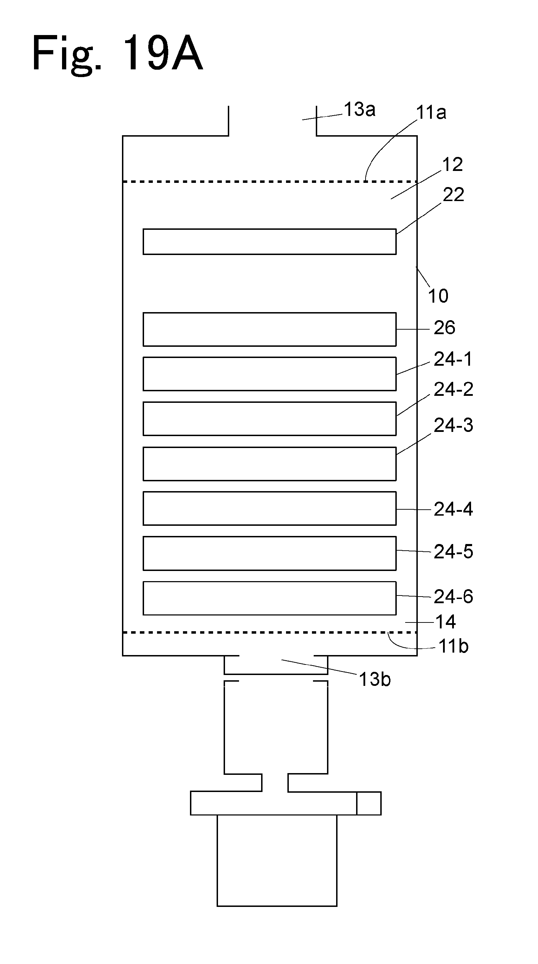

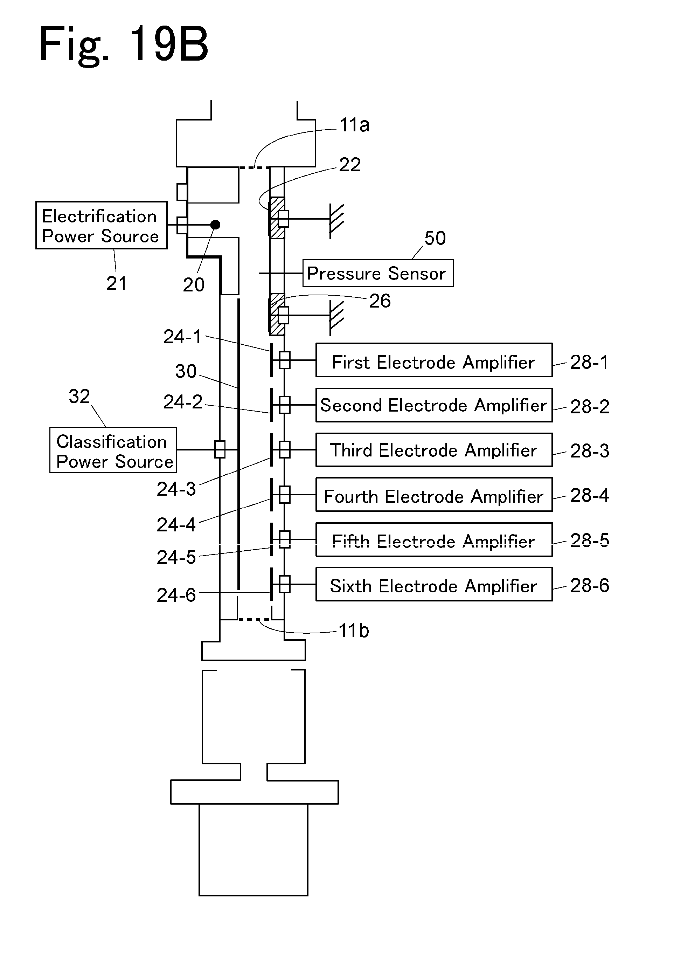

When measurement conditions and device specifications are set as shown in Table 1, and electrification is performed so as to obtain the particle size-electrical mobility relationship of Fig. 2 in the configuration of the example of Figs. 18 to 20 described later, particle size ranges provided by a differential signal between a second measurement electrode 24-2 and a first measurement electrode 24-1, by a differential signal between a third electrode 24-3 and the second electrode 24-2, by a differential signal between a fourth electrode 24-4 and the third electrode 24-3, by a differential signal between a fifth electrode 24-5 and the fourth electrode 24-4, and by a differential signal between a sixth electrode 24-6 and the fifth electrode 24-5 are shown in Fig. 7. Note that, in the tables and drawings, "E + X" and "E - X" represent "$10^{+x}$" and "$10^{-x}$" respectively.

[Table 1]

|  | Measurement data item | Design value | Unit |
|---|---|---|---|
| Measurement condition | Outside air temperature | 15 | °C |
|  | Atmospheric pressure | 101.3 | kPa |
| Device specification | Flow rate | 20 | 1/min |
|  | Voltage | 400 | V |
|  | Interelectrode distance | 4 | mm |
|  | Electrode width | 250 | mm |
|  | Time constant | 1 | second |
|  | Minimum current value (lower detection limit) | 4.27E-15 | A |
|  | Run-up distance | 55.997 | mm |
|  | First electrode location | 0.00E+00 - 5.70E-03 | m |
|  | Second electrode location | 5.7E-03 - 3.99E-02 | m |
|  | Third electrode location | 3.99E-02 - 7.41E-02 | m |
|  | Fourth electrode location | 7.41E-02 - 1.083E-01 | m |
|  | Fifth electrode location | 1.083E-01 - 1.425E-01 | m |
|  | Sixth electrode location | 1.425E-01 - 1.767E-01 | m |
|  | Minimum detectable particle concentration | 100 | particles/cc |

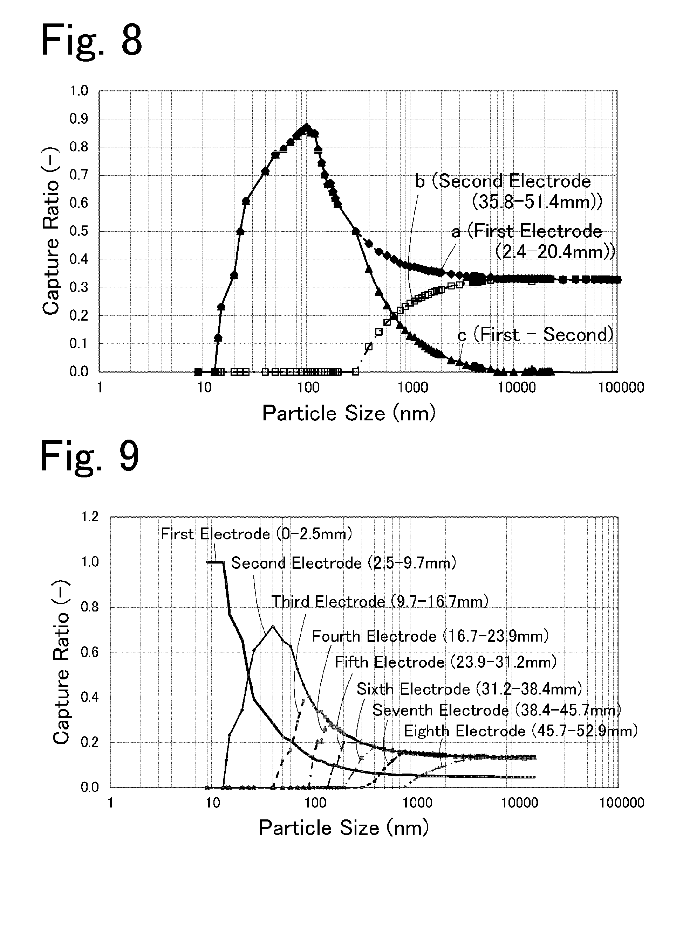

When measurement conditions and device specifications are set as shown in Table 2, and electrification is performed so as to obtain the particle size-electrical mobility relationship of Fig. 2 in the configuration of Fig. 1, the ratios (capture ratios) of reaching the first measurement electrode 24-1 and the second measurement electrode 24-2, as well as the particle size range provided by a differential signal between the first measurement electrode 24-1 and the second measurement electrode 24-2 are shown in Fig. 8.

[Table 2]

|  | Measurement data item | Design value | Unit |
|---|---|---|---|
| Measurement condition | Outside air temperature | 15 | °C |
|  | Atmospheric pressure | 101.3 | kPa |

(continued)

| | Measurement data item | Design value | Unit |
|---|---|---|---|
| Device specification | Sample gas flow rate Q | 46.8 | 1/min |
| | Classification voltage V | 1000 | V |
| | Interelectrode distance d | 4 | mm |
| | Classification electrode width | 250 | mm |
| | Time constant | 1 | second |
| | Minimum current value (lower detection limit) | 9.998E-16 | A |
| | Run-up distance | 55.997 | mm |
| | First electrode location | 2.40E-03- 2.04E-02 | m |
| | Second electrode location | 3.58E-02- 5.14E-02 | m |
| | Minimum detectable particle concentration resolution | 100 | particles /cc |

A time constant is a measurement period, and a time constant of one second means that a signal dependent on the number of collected particles is output every one second. A time constant affects the minimum detectable particle concentration. If a signal is output every 0.1 seconds, the signal magnitude decreases to one tenth, while an excessively high time constant prevents the device from tracking a phenomenon changing rapidly.

Fig. 8 illustrates a ratio (a) of capture (capture ratio) by the first measurement electrode 24-1, a capture ratio (b) of the second measurement electrode 24-2, for each particle size, and a differential signal (c) obtained by subtracting the capture ratio of the second measurement electrode 24-2 from the capture ratio of the first measurement electrode 24-1 for each particle size, obtained with this two-stage electrode type device. Although use of the first measurement electrode alone cannot eliminate the effects of particles on a larger particle-size side, use of a differential signal obtained by differencing capture ratios enables only a signal corresponding to a particular particle size range to be extracted.

In a similar manner, capture ratios of respective measurement electrodes for each particle size are shown in Fig. 9 for an example in which measurement conditions and device specifications of Table 3 are set in an eight-stage electrode type device, and electrification is performed so as to obtain the particle size-electrical mobility relationship of Fig. 2 in the configuration of Fig. 1.

[Table 3]

| | Measurement data item | Design value | Unit |
|---|---|---|---|
| Measurement condition | Outside air temperature | 15 | °C |
| | Atmospheric pressure | 101.3 | kPa |

(continued)

|  | | Measurement data item | Design value | Unit |
|---|---|---|---|---|
| Device specification | | Flow rate | 46.8 | 1/min |
| | | Voltage | 1000 | V |
| | | Interelectrode distance | 4 | mm |
| | | Electrode width | 250 | mm |
| | | Number of laminated electrodes | 1 | layer |
| | | Electrode plate thickness | 0.6 | mm |
| | | Classification section height (thickness) | 5.2 | mm |
| | | Time constant | 1 | second |
| | | Minimum current value (lower detection limit) | 9.998E-16 | A |
| | | Run-up distance | 55.997 | mm |
| | | First electrode location | 0.00E+00 - 2.50E-03 | m |
| | | Second electrode location | 2.50E-03 - 9.67E-03 | m |
| | | Third electrode location | 9.67E-03 - 1.67E-02 | m |
| | | Fourth electrode location | 1.67E-02 - 2.39E-02 | m |
| | | Fifth electrode location | 2.39E-02 - 3.12E-02 | m |
| | | Sixth electrode location | 3.12E-02 - 3.84E-02 | m |
| | | Seventh electrode location | 3.84E-02 - 4.57E-02 | m |
| | | Eighth electrode location | 4.57E-02 - 5.29E-02 | m |
| | | Minimum detectable particle concentration | 10 | Particles /cc |

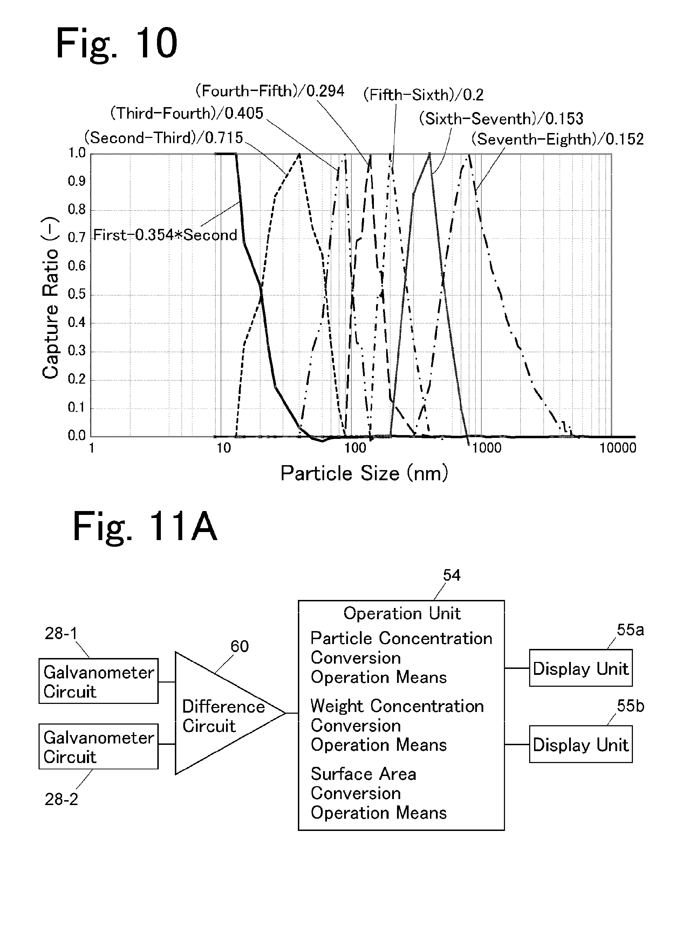

Based on the results of Fig. 9, capture ratios indicated by differential signals between an n-th and an (n + 1)th electrodes for each particle size are shown in Fig. 10. In the graph of Fig. 10, the capture ratios are normalized so that the peak values of particle size distribution for the differences between electrodes match.

Particle size distribution obtained by a difference has the following significance. Before differencing, data of each electrode includes data for particles having large particle sizes without limitation. In contrast, differencing allows particles only in a particular particle size range to be counted. In addition, differencing cancels out noise due to factors such as vibration, temperature, radiation, etc., and thereby allows a measured signal having a high S/N ratio to be obtained.

Normalization has the following significance. Particles having a larger particle size result in, theoretically and practically, a lower ratio of the number of particles captured by each electrode with respect to the number of particles introduced per unit time. Normalization is theoretical correction, by a software process, of this reduction of the numbers of particles captured by electrodes assuming that the concentration of the numbers of introduced particles is 1.

Returning to the example of Fig. 1, the galvanometer circuits 28-1 and 28-2 connected to the respective measurement electrodes are connected to an operation unit 54 as shown in Figs. 11A and 11B, where predetermined computational processing is performed using the amounts of charge of charged fine particles. The galvanometer circuit 28-1 and 28-2 may be connected to the operation unit 54 via a difference circuit 60 as shown in Fig. 11 A depending on the embodiment. Although the description here assumes that two measurement electrodes are provided, there may be only one measurement electrode provided depending on the embodiment, in which case no difference circuits are provided as shown in Fig. 11B. In addition, in other embodiments, three or more measurement electrodes may be provided, in which case a difference circuit 60 is provided for each pair of measurement electrodes whose difference are to be obtained.

The operation unit 54 may be implemented by a special-purpose computer for controlling the operation of this fine particle classification measurement device, or by an external general-purpose computer such as a personal computer. The operation unit 54 is connected with a display unit 55a, such as a liquid crystal display device, for displaying a measurement result, and with a recording unit 55b, such as a printer, for recording.

The operation unit 54 applied in the example of Fig. 1 calculates the number of fine particles, the total surface area, the total weight, or the concentration values thereof, as a quantity of fine particles resulting from classification of the charged fine particles that have reached the measurement electrodes 24-1 and 24-2.

For example, in order to calculate particle concentration as a quantity of fine particles resulting from classification of the charged fine particles that have reached the measurement electrodes 24-1 and 24-2, the operation unit 54 includes particle concentration conversion operation means. To this end, the operation unit 54 holds number-of-particles calibration data representing a relationship between the amount of charge and the number of fine particles for each of the measurement electrodes 24-1 and 24-2, and calculates the numbers of particles of the charged fine particles that have respectively reached the measurement electrodes 24-1 and 24-2 from the amounts of charge detected by the galvanometer circuits 28-1 and 28-2 regarding the measurement electrodes 24-1 and 24-2 based on the number-of-particles calibration data.

The number-of-particles calibration data is obtained in advance, and is held in the computer, which is the operation unit 54. Typical particle size distribution is often substantially identical for a particular measurement target.

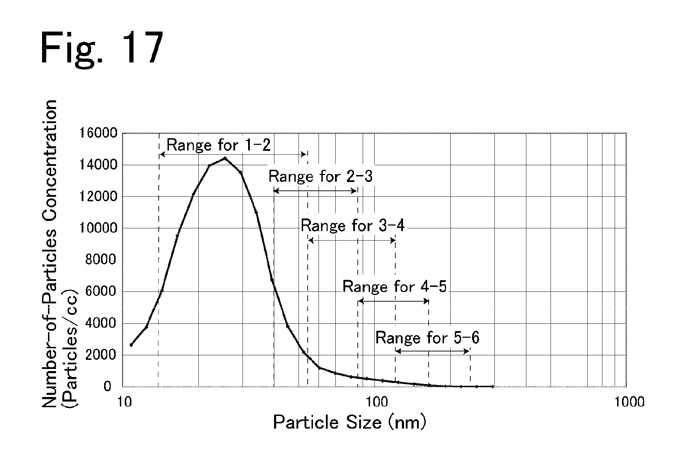

The number-of-particles calibration data can be obtained by operating in parallel, for a measurement target, a device for counting an accurate number of particles, such as a combination of a DMA and a CPC, and the fine particle classification measurement device of this example. For example, Fig. 17 illustrates an example of number concentration distribution in the air for each particle size measured by a reference instrument (DMA). At the same time, the same sample is sucked to this device. Results of accumulating measurement results of the reference instrument for respective particle size segments under certain operational condition of this device, as well as differential signals of the corresponding electrodes are shown in Table 4. Clean air is sucked before the measurement, and zero point adjustment is performed so that the measured current will be 0 A at the number of sucked particles of 0 particles/cc. Thus, a conversion factor defined below can be obtained:

$$\text{Conversion factor}$$
$$= \text{Reference number of particles/Measured current}$$

Hereinafter, multiplication of a measured current value by this value yields the measured number-of-particles concentration.

[Table 4]

| Electrode number | 1-2 | 2-3 | 3-4 | 4-5 | 5-6 |
|---|---|---|---|---|---|
| Particle size range (min-mode-max: nm) | 14-40-56.9 | 40-56.9-87.1 | 56.9-87.1-122.9 | 87.1-122.9-167.8 | 122.9-167.8-230.0 |
| Number concentration (reference instrument) (Particles/cc) | 93354.01 | 15399.149 | 6053.594 | 2102.7877 | 643.238 |
| Measured value (A) | 9.27605E-12 | 1.2668E-12 | 4.51133E-13 | 1.54258E-13 | 4.91807E-14 |
| Conversion factor | 1.0064E+16 | 1.21559E+16 | 1.34186E+16 | 1.36316E+16 | 1.30791E+16 |

In order to calculate a total surface area as a quantity of fine particles resulting from classification of the charged fine particles that have reached the measurement electrodes 24-1 and 24-2, the operation unit 54 includes surface area conversion operation means. The surface area conversion operation means holds total surface area calibration data representing a relationship between the amount of charge and the total surface area for each of the respective measurement electrodes 24-1 and 24-2, and calculates the total surface areas of the charged fine particles that have respectively reached the measurement electrodes 24-1 and 24-2 from the amounts of charge detected by the galvanometer circuits 28-1 and 28-2 regarding the measurement electrodes 24-1 and 24-2 based on the total surface area calibration data.

The total surface area calibration data is also obtained in advance, and is held in the computer, which is the operation unit 54. The total surface area calibration data can be obtained by operating in parallel a device capable of measuring an accurate surface area, such as a scanning electron microscope (SEM), a transmission electron microscope (TEM), or an atomic force microscope (AFM), and the fine particle classification measurement device of this example. For example, while a sample is sucked to the device, the same sample is collected by, for example, an electrostatic collector. The collected sample is observed by an SEM, a TEM, or an AFM, and images thereof are analyzed by particle size analysis software to obtain the particle size of the collected particles and number-of-particles concentration thereof. The conversion factor is then calculated in a similar manner to the case of the number concentration described above.

In order to calculate a total weight as a quantity of fine particles resulting from classification of the charged fine particles that have reached the measurement electrodes 24-1 and 24-2, the operation unit 54 includes weight concentration conversion operation means. The weight concentration conversion operation means holds total weight calibration data representing a relationship between the amount of charge and the total weight for each of the measurement electrodes 24-1 and 24-2, and calculates the total weight of the charged fine particles that have respectively reached the measurement electrodes 24-1 and 24-2 from the amounts of charge detected by the galvanometer circuits 28-1 and 28-2 regarding the measurement electrodes 24-1 and 24-2 based on the total weight calibration data.

The total weight calibration data is also obtained in advance, and is held in the computer, which is the operation unit 54. The total weight calibration data can be obtained by operating in parallel a device for counting an accurate weight concentration, such as a tapered element oscillating microbalance (TEOM) or an Electrical Low Pressure Impactor, and the fine particle classification measurement device of this example.

Table 5 shows an example of weight concentration distribution for each particle size of some air measured by a reference instrument (TEOM). At the same time, the same sample is sucked to this device. Results of accumulating measurement results of the reference instrument for respective particle size segments of this device, as well as differential signals of the corresponding electrodes are shown in the Table. Clean air is sucked before the measurement, and zero point adjustment is performed so that the measured current will be 0 A at the number of sucked particles of 0 particles/cc. Thus, a conversion factor defined below can be obtained:

$$\text{Conversion factor} = \text{Reference weight concentration/Measured current}$$

Hereinafter, multiplication of a measured current value by this value yields the measured weight concentration.

[Table 5]

| | | | | | | | |
|---|---|---|---|---|---|---|---|
| Measurement result of reference instrument | Classification particle size (nm) | 7 | 14 | 30 | 42 | 60 | 81 |
| | Measurement result (g/cc) | 2.930E−23 | 1.240E−20 | 5.563E−19 | 5.166E−19 | 2.362E−19 | 2.559E−19 |
| | Classification particle size (nm) | 108 | 140 | 170 | 210 | 260 | 330 |
| | Measurement result (g/cc) | 3.704E−19 | 4.165E−19 | 1.559E−19 | 1.937E−19 | 6.980E−20 | 4.364E−19 |
| Measurement result of this device | Electrode number | 1−2 | 2−3 | 3−4 | 4−5 | 5−6 | |
| | Particle size range Min. | 14 | 40 | 56.9 | 87.1 | 122.9 | |
| | Mode | 40 | 56.9 | 87.1 | 122.9 | 167.8 | |
| | Max. (:nm) | 56.9 | 87.1 | 122.9 | 167.8 | 230.0 | |
| | [1] Measured value (a) | 9.276E−12 | 1.267E−12 | 4.511E−13 | 1.543E−13 | 4.918E−14 | |
| | [2] Measurement result of reference instrument corrected and Rounded based on measurement result of this device | 1.322E−18 | 1.009E−18 | 8.625E−19 | 1.199E−18 | 1.206E−18 | |
| | Conversion factor ([2]/[1]) | 1.425E−07 | 7.963E−07 | 1.912E−06 | 7.771E−06 | 2.453E−05 | |

A flowmeter 19 for measuring the sample gas flow rate is provided on the entrance side (or on the exit side) of the channel 10, and then the operation unit 54 includes a concentration value computation unit 58 that divides the number of fine particles, the total surface area, or the total weight calculated, by the sample gas flow rate measured by the flowmeter 19, thereby to calculate the corresponding concentration value.

In addition, providing, in the operation unit 54, inverse operation units 62-1 and 62-2 that perform data processing for eliminating the influence of multivalent charging as performed in a DMA enables the number-of-particles concentration to be obtained without value determination by other measurement devices, such as a DMA and a CPC.

The channel in this example has a laterally flattened cross section in the direction perpendicular to the flow direction of the channel, but the cross-sectional shape of the channel may be longitudinally flattened, which results from a rotation of that of this example by 90 degrees. Moreover, the channel is not limited to one having a rectangular cross section as shown in this example, but may be one having a circular cross section, or one in which the attraction electrodes (measurement electrode(s) and trap electrode) and the classification electrode are disposed facing each other in a double cylinder configuration.

The discharge electrode of the electrifier is not limited to a needle electrode, but may be a combination of a wire electrode and an opposed flat-plate electrode; a combination of two wire electrodes; a plurality of such combinations; such plurality of combinations arranged so that the polarity of the electrodes differs in a staggered arrangement in a vertical direction with respect to the channel; one or more pairs of wire electrodes arranged in a vertical direction with respect to the channel, and one or more pairs of opposed flat-plate electrodes arranged in a horizontal or vertical direction with respect to the channel; etc.

Changing the voltage applied to the discharge electrode(s) of the electrifier, the distance between the discharge electrode(s) and the counter electrode, the number of the discharge electrodes, or the position density of the discharge electrodes can change the slope of the curve shown in Fig. 2. This enables the particle size range of the captured particles to be changed for the same measurement electrode.

Changing the location or the electrode width of a measurement electrode, or the number of the measurement electrodes can also change the particle size range of the captured particles for the same measurement electrode.

Changing the classification voltage or the sample gas flow velocity can also change the particle size range of the captured particles for the same measurement electrode.

In addition, reducing the electrode width of a measurement electrode can improve particle size resolution as compared to a measurement electrode having a wider electrode width disposed at the same distance from the base point of the classification electric field.

Fig. 12 schematically illustrates another example of a fine particle classification measurement device of the present invention. This example only differs from the example of Fig. 1 in a measurement electrode 24a and in a trap electrode 26a, both which are attraction electrodes facing the classification electrode 30. The remainder of the configuration remains the same. The same reference characters are used for the same components as those of the example of Fig. 1, and the explanation thereof will be omitted.

The attraction electrodes facing the classification electrode 30 includes one measurement electrode 24a and a trap electrode 26a, disposed upstream, that is, on the entrance side of the channel 10, of the measurement electrode 24a in the direction of the sample gas flow in the channel. Similarly to the example of Fig. 1, the front edge location on the channel entrance side of the classification electrode 30, and the front edge location on the channel entrance side of the trap electrode 26a are positioned at the same distance from the channel entrance. This front edge location is the base point of the classification region, and the distance from the channel entrance to the base point of the classification region is the run-up distance.

This example is also similar to the example of Fig. 1 in that the measurement electrode 24a and the trap electrode 26a are at the same potential, and that the measurement electrode 24a is connected with a galvanometer circuit 28a, while the trap electrode 26a is not connected with a galvanometer circuit.

The fine particles contained in the sample gas introduced from the channel entrance are electrically charged by a discharge of the discharge electrode 20a. An electric field for classification is applied across the classification electrode 30 and the trap electrode 26a and the measurement electrode 24a, and the charged fine particles are sent into this classification electric field along with the sample gas flow.

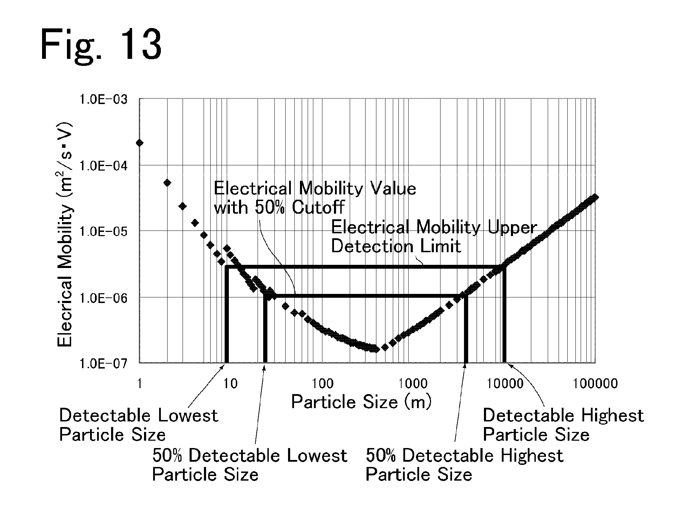

Fig. 13 illustrates a relationship between the particle size and the movability in an electric field (electrical mobility) of charged fine particle in this example. The graph shows experimental values, complemented by values in Non-Patent Document 3. Here, with a particle size of approximately 400 nm as the predetermined particle size acting as a boundary, fine particles having particle sizes less than 400 nm are electrically charged by unipolar diffusion charging, while fine particles having particle sizes greater than 400 nm are electrically charged by unipolar field charging.

In the fine particle classification measurement device as well, the charged fine particles are flowed toward the exit with a sample gas flow, and at the same time, move toward the trap electrode 26a and the measurement electrode 24a, in the electric field in the classification section. Very small fine particles and very large fine particles are captured by the trap electrode 26a located on the entrance side, and only fine particles in a particular particle size range reach the measurement electrode 24a, and then the charges thereof are detected by the galvanometer circuit 28a connected to the measurement electrode 24a.

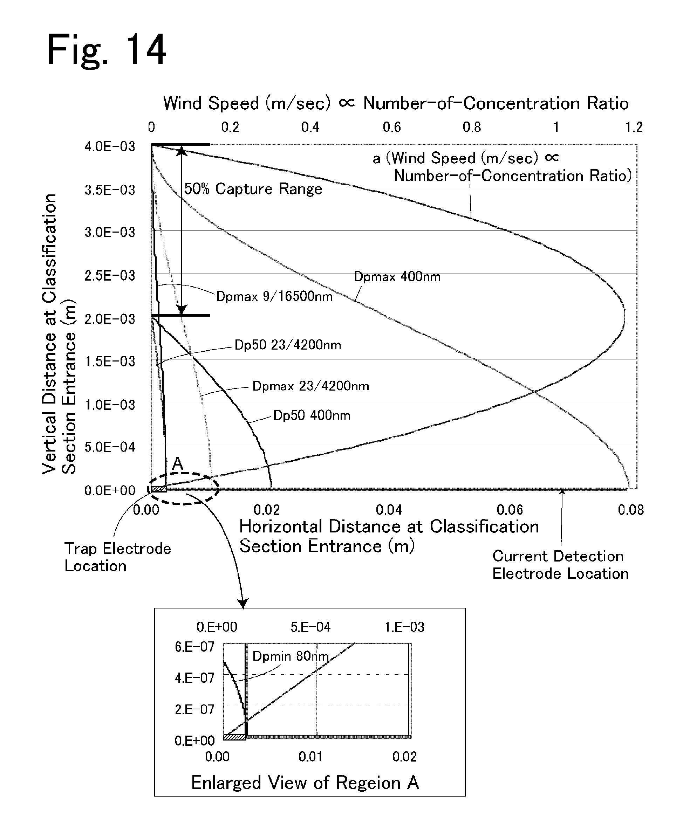

The particle size ranges of the particles reaching the first measurement electrode 24-1 in the configuration of Fig. 12 when measurement conditions and device specifications are set as shown in Table 6, and electrification is performed so as to obtain the particle size-electrical mobility relationship of Fig. 13, are shown in Fig. 14. Fig. 14 illustrates trajectories, in the classification section, of particles having several different particle sizes.

As shown in Fig. 13, it is evident that, in this charge state, (1) a particle of 9 nm size and a particle of 16500 nm size have the same electrical mobility, (2) a particle of 23 nm size and a particle of 4200 nm size have the same electrical mobility, and (3) a particle of 400 nm size has the minimum electrical mobility.

A trajectory indicated as Dpmax in Fig. 14 shows that particles having that particle size will all be sucked into a region having a smaller horizontal distance than that. A trajectory indicated as Dp50 means that the number of particles collected per unit time in a region from a horizontal distance where a line of zero vertical distance crosses to zero horizontal distance is 50% of the number of particles sucked per unit time from the entrance (in other words, the number of particles collected per unit time in a region from a horizontal distance where the trajectory indicated as Dp50 crosses a line of zero vertical distance to a horizontal distance where the trajectory of Dpmax crosses a line of zero vertical distance is 50% of the number of particles sucked per unit time from the entrance).

According to the fact (1), which means that a particle of 9 nm size and a particle of 16500 nm size exist in the same region, and by arranging a trap electrode not involved in measurement in that region in the example of Fig. 14, particles having higher electrical mobility are captured by the trap electrode, and are thus removed. That is, it represents the electrical mobility upper detection limit of Fig. 13. The particle size on the smaller particle-size side that represents the electrical mobility upper detection limit of Fig. 13 is 9 nm, which is the detectable lowest particle size of Fig. 13, while the particle size on the larger particle-size side that represents the electrical mobility upper detection limit is 16500 nm. That is, in this example, one measurement electrode can detect particles only in a particle size range from 9 to 16500 nm. The required length of the electrode is the length that allows collection of particles of 400 nm size having the minimum electrical mobility of the fact (3). That is, it is understood that the length to the horizontal distance where the trajectory of Dpmax 400 of Fig. 14 crosses a line of zero vertical distance is sufficient. Particles of 23 nm size and of 4200 nm size are detected in a detection ratio of 50%.

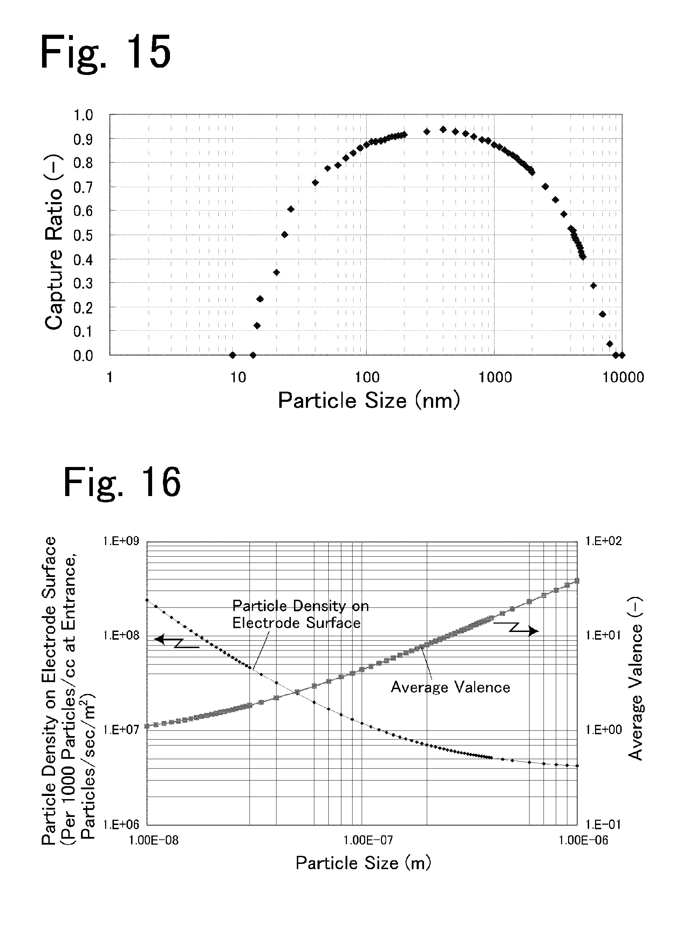

Fig. 15 is a graph illustrating the particle size of charged fine particles and the capture ratio associated with the measurement electrode 24a in this example.

Fig. 16 is a graph of experimental values, complemented by literature values, showing a relationship between the particle size and the average valence of fine particles electrically charged by unipolar charging, and a relationship between the particle size and the particle density of particles captured per unit time and per unit area of a measurement electrode when the particle concentration in each particle size is 1000 particles/cc in the example shown in Figs. 18 to 20.

[Table 6]

| | Measurement data item | | | Design value | Unit |
|---|---|---|---|---|---|
| Measurement condition | Outside air temperature | | | 15 | °C |
| | Atmospheric pressure | | | 101.3 | kPa |
| Device specification | Flow rate | | | 46.8 | 1/min |
| | Voltage | | | 1000 | V |
| | Interelectrode distance | | | 4 | mm |
| | Electrode width | | | 250 | mm |
| | Number of laminated electrodes | | | 1 | layer |
| | Electrode Plate Thickness | | | 0.6 | mm |
| | Classification section height (thickness) | | | 5.2 | mm |
| | Time constant | | | 1 | second |
| | Pressure loss in classification section | | | 3.493E-02 | Pa |
| | Minimum current value (lower detection limit) | | | 9.998E-16 | A |
| | Run-up distance | | | 55.997 | mm |
| | Particle size measured | -26 nm, 4400nm - | Electrode location | 0.000 - 2.475 | mm |
| | Particle size measured | 26 nm-4400nm | Electrode location | 2.475 - 78.752 | mm |
| | Center, 26 nm, particle travel time | | | 6.346E-03 | second |
| | Center, 400 nm, particle travel time | | | 5.048E-02 | second |
| | Center, 4400 nm, particle travel time | | | 6.365E-03 | second |
| | Minimum measurable particle concentration | | | 10 | particles /cc |

The galvanometer circuit 28a connected to the measurement electrode 24a is also connected to the operation unit 54 shown in Fig. 11A or Fig. 11B, where predetermined computational processing is performed based on the amounts of charge of the charged fine particles. Since the example of Fig. 12 includes one measurement electrode, the number of the galvanometer circuit is also one. In Fig. 11A or Fig. 11, replacing the galvanometer circuit 28-1 with the galvanometer circuit 28a, removing the other galvanometer circuit 28-2, and removing the difference circuit 60 or the difference operation means yields the control unit 54 of this example. Also in this example, the operation unit 54 may be implemented by a special-purpose computer for controlling the operation of the fine particle classification measurement device, or by an external general-purpose computer such as a personal computer.

In this example as well, the operation unit 54 calculates the number of fine particles, the total surface area, the total weight, or the concentration values thereof, as a quantity of fine particles resulting from classification of the charged fine particles that have reached the measurement electrode 24a. To this end, the operation unit 54 includes number-of-particles concentration conversion operation means, weight concentration conversion operation means, and surface area conversion operation means. The function of each means is as described for the example of Fig. 1 based on Figs. 11A and 11B, and calibration data held by the operation unit 54 for the number-of-particles concentration conversion operation means, for the weight concentration conversion operation means, and for the surface area conversion operation means can also be obtained by processes as described based on Figs. 11 A and 11B.

In this example as well, the channel may be modified as described regarding the example of Fig. 1.

Changing the voltage applied to the discharge electrode(s) of the electrifier, the distance between the discharge electrode(s) and the counter electrode, the number of the discharge electrodes, or the position density of the discharge electrodes can change the position of the minimum value of the curve shown in Fig. 13, and the narrow angle included by the V-shaped curve. This enables the particle size range of the particles captured by the measurement electrode to be changed.

Changing the location or the electrode width of the measurement electrode can also change the particle size range of the particles captured by the measurement electrode.

Changing the classification voltage or the sample gas flow velocity can also change the particle size range of the particles captured by the measurement electrode.

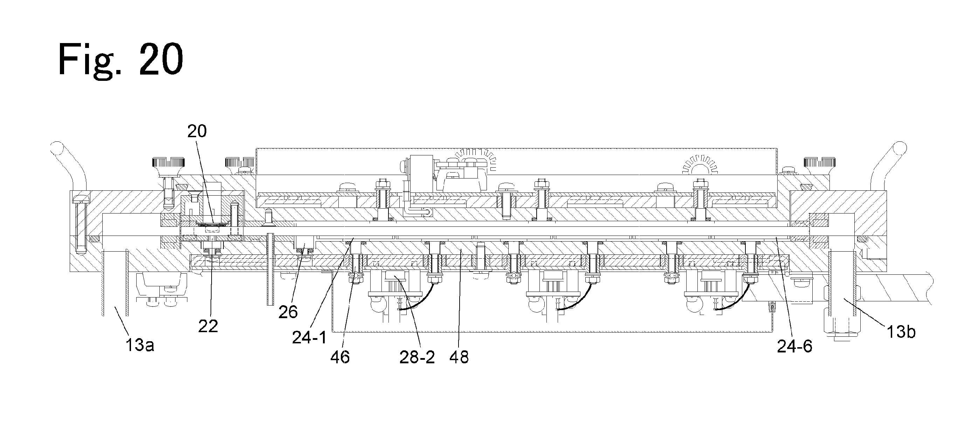

Figs. 18 to 20 together illustrate a configuration of a still another example of a fine particle classification measurement device. Fig. 20 is a cross-sectional view along the channel.

The channel 10 has a shape of a flattened rectangular parallelepiped, flow parallelization resistors 11 a and 11 b are respectively disposed at the entrance 12 and the exit 14 for converting the sample gas flow into a parallel flow. The flow parallelization resistors 11 a and 11 b are arranged so as to provide flow resistance such that the sample diffuses uniformly in the channel width direction. A sample inlet 13a and an outlet 13b that communicate with the channel each have a flow cross-sectional area smaller than that of the channel 10, but the flow parallelization resistors 11 a and 11 b makes the sample gas flow in the channel 10 a parallel flow that is uniform across the channel width.

A blower 40 is connected, as a blower mechanism, to the outlet 13b that communicates with the exit 14 of the channel 10, and an air flow rate sensor 42 is disposed upstream of the blower 40. A regulator 44 is provided so that the flow rate of the sample gas flowing in the channel 10 is kept constant. The regulator 44 regulates the supply air flow volume of the blower 40 so that the air flow rate sensed by the air flow rate sensor 42 is maintained at a predetermined constant value at which the sample gas forms a laminar flow.

An electrifier for electrically charging the fine particles in the sample gas is disposed in the vicinity of the entrance of the channel 10. The electrifier in this example includes a discharge electrode 20 formed of a wire arranged in the width direction of the channel 10 on the top-face side of the channel 10, and a counter electrode 22 arranged in parallel to the discharge electrode 20 on the lower-bottom-face side of the channel 10. The discharge electrode 20 and the counter electrode 22 each have a shape extending perpendicularly to the plane in Figs. 18,19B, and 20. The discharge electrode 20 is disposed at a location recessed from the channel 10. The gap between the discharge electrode 20 and the counter electrode 22 is 7 mm, which is merely by way of example, and this distance may vary depending on the electrification voltage or the demanded ion concentration.

A trap electrode 26 and six measurement electrodes 24-1 to 24-6 are disposed on the lower bottom face of the channel 10, in order from upstream to downstream at locations at different distances from one another from the entrance 12 along the channel direction. The measurement electrodes 24-1 to 24-6 are disposed adjacent to each other with a gap interposed between the two adjacent measurement electrodes. Each of the trap electrode 26 and the measurement electrodes 24-1 to 24-6 has studs 46 welded at a center location in the channel direction. Three of the studs 46 are provided along the channel width direction in each of the trap electrode 26 and the measurement electrodes 24-1 to 24-6. Inserting each of the studs 25 into a hole opened in a base substrate 48 of the measurement device fixes the locations, in the channel direction, of the trap electrode 26 and the measurement electrodes 24-1 to 24-6.

Among the studs 46 of the measurement electrodes 24-1 to 24-6, studs disposed in center positions in the channel width direction also serve as terminals for extracting the detected currents, and these studs 46 are respectively connected to the corresponding galvanometer circuits 28-1 to 28-6. The galvanometer circuits 28-1 to 28-6 each include an amplification circuit (amplifier). Although, here, the galvanometer circuits 28-1 to 28-6 are provided for all the measurement electrodes, galvanometer circuits may be connected only to measurement electrodes with which a current value is to be detected. The studs 46 of the trap electrode 26 are not connected to a galvanometer circuit, but are grounded. One classification electrode 30 is disposed on the top face of the channel 10, facing the trap electrode 26 and the measurement electrodes 24-1 to 24-6. The trap electrode 26 and the measurement electrodes 24-1 to 24-6 and the classification electrode 30 are aligned with each other at both edges on the entrance side and on the exit side of the channel 10.

A pressure sensor 50 is also provided between the electrifier and the trap electrode 26, on the entrance side of the channel 10, so as to sense the pressure of the sample gas flowing in the channel 10. The pressure sensor 50 is aimed at detecting abnormality in the sample gas flow flowing in the channel 10.

An AC/DC power supply 52 is provided for supplying direct current power supply required for operation to components, and power supply is supplied from the AC/DC power supply 52 to these components via corresponding switches.

A CPU 54a is provided for receiving and recording detection signals from the galvanometer circuits and various sensors, and for calculation for classification. The CPU 54a implements the operation unit 54 shown in Figs. 11A and 11B. An AC/DC adapter 56 is provided to supply power supply to the CPU 54a.

In this example as well, the classification operation of the sample gas is the same as that of the example of Fig. 1, and thus, the explanation of the operation will be omitted.

In this example, the locations of the measurement electrodes 24-1 to 24-6 are determined by the holes in the base substrate 29 and by the attachment positions of the studs 25 in the measurement electrodes 24-1 to 24-6. For example, assuming that the hole positions in the base substrate 48 are fixed, exchanging the attachment positions of the studs 25 in the measurement electrodes 24-1 to 24-6 with positions other than the center positions in the channel direction can change the locations, in the channel direction, of the measurement electrodes 24-1 to 24-6.

Although six measurement electrodes are provided in this example, doubling the electrode width and attaching six of the studs 46 in two rows per one electrode allows the number of the electrodes to be changed to three.

In addition, regarding the detection signals of the first to sixth measurement electrodes, adding together the detection signals of the first and the second measurement electrodes, the detection signals of the third and the fourth measurement electrodes, and the detection signals of the fifth and the sixth measurement electrodes by either hardware or software results in the same result as when three electrodes are provided.

The example of Fig. 12 can also have an electrode configuration similar to that shown in Fig. 20, as a specific configuration. In such a case, attaching the studs 46 to the trap electrode 26a as well, forming the holes in the base substrate for inserting these studs 46 as elongated holes elongated in the channel direction, and using a trap electrode having a different width in the channel direction instead allows the location and the width of the trap electrode to be changed.

An example of a sample creation device, or an example of a nanoparticle film forming device is one that includes a channel, a blower mechanism, an electrifier, one or more attraction electrodes, and a classification electrode of any one of the examples described above regarding a fine particle classification measurement device, wherein the attraction electrodes 24-1, 24-2, ···, 24-n, 24a do not have a function as a measurement electrode, and a sampling collection substrate or a nanoparticle film forming substrate is placed on the surface thereof. The galvanometer circuit(s) and the operation unit for calculating a quantity of fine particles resulting from classification of charged fine particle in the examples of a fine particle classification measurement device are not needed.

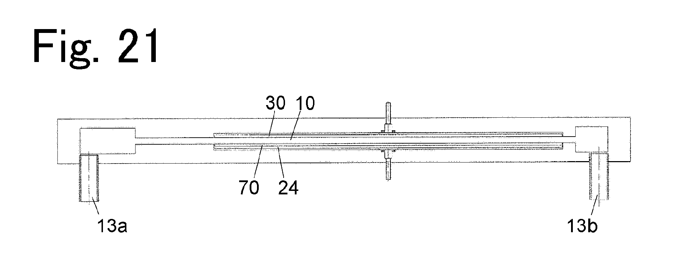

An attraction electrode has a configuration such as one shown in Fig. 21 in order to place the sampling collection substrate or the nanoparticle film forming substrate so as not to prevent the laminar flow, and not to disturb the electric field.

In the example of Fig. 21, an attraction electrode 24 is disposed at a location recessed from the channel 10 by the thickness of a flat-plate substrate 70 (the sampling collection substrate or the nanoparticle film forming substrate). The substrate 70 is arranged so as to cover the entire attraction electrode 24. This makes the surface of the substrate 70 flush with a bottom face of the channel 10, thereby preventing the substrate 70 from protruding into the channel 10, and hence from disturbing the laminar flow in the channel 10.

A configuration for preventing the substrate 70 from protruding into the channel 10 may be a configuration in which a recess having a depth of the thickness of the substrate 70 is formed in the attraction electrode 24, and the substrate 70 is disposed in the recess, or a configuration in which the thickness of the attraction electrode 24 is reduced by the thickness of the substrate 70, and the substrate 70 is disposed on the attraction electrode 24. In either configuration, the surface of the substrate 70 disposed on the attraction electrode 24 is flush with a bottom face of the channel 10, thereby preventing the substrate 70 from disturbing the laminar flow in the channel 10.

DESCRIPTION OF REFERENCE SIGNS

10: Channel
12: Entrance of channel
14: Exit of channel
16: Fan
18: Flow regulating valve
19: Flowmeter
20: Discharge electrode
21: Electrification power source
22: Counter electrode
24-1, 24-2, ···, 24-n, 24a: Measurement electrode
26: Trap electrode
28-1, 28-2, 28a: Galvanometer circuit
30: Classification electrode
32: Classification power source
54: Operation unit
60: Difference circuit
70: Substrate

**Claims**

1. A fine particle classification measurement device comprising:

   a parallel channel in which sample gas flowing inside can form a laminar flow;
   a blower mechanism configured to suck the sample gas from an entrance of the channel, and driven under a condition where the sucked sample gas flows in the channel as the laminar flow;
   an electrifier having a discharge electrode disposed on an entrance side of the channel, and configured to electrically charge fine particles in the sample gas;
   one or more attraction electrodes disposed, on one face of a pair of opposed faces of the channel, downstream of the electrifier along a channel direction at locations at different distances from one another from the entrance of the channel, the one or more attraction electrodes each having a predetermined electrode width in the channel direction, and electrically separated from each other;
   a classification electrode disposed on the other face of the pair of opposed faces, facing the attraction electrodes, the classification electrode being configured to generate, between the attraction electrodes and the classification electrode, an electric field that attracts the electrically-charged fine particles in the sample gas flowing in the channel, toward the attraction electrodes;
   with at least one of the attraction electrodes serving as a measurement electrode, a galvanometer circuit corresponding to each of the measurement electrode and connected to the measurement electrode, and configured to detect amounts of charge of fine particles that have reached the measurement electrode; and
   an operation unit connected to the galvanometer circuit, and configured to calculate a quantity of fine particles resulting from classification of the electrically-charged fine particles that have reached the measurement electrode based on the amounts of charge detected by the galvanometer circuit.

2. The fine particle classification measurement device according to claim 1, wherein
   the number of the measurement electrodes is two or more, the measurement electrodes are respectively connected to the corresponding galvanometer circuits to detect the amounts of charge of electrically-charged fine particles in different particle size ranges by the respective measurement electrodes.

3. The fine particle classification measurement device according to claim 2, wherein
   in order for tail heights on a larger particle-size side of particle size distribution of the electrically-charged fine particles measured respectively in association with two of an n-th and an (n + 1)th measurement electrodes to be the same, electrode areas of the two measurement electrodes are the same, or measured current values are corrected to values per same electrode area.

4. The fine particle classification measurement device according to claim 2 or 3 further comprising:

   a difference circuit connected between the galvanometer circuits and the operation unit, and configured to calculate a difference between measured signals of the respective galvanometer circuits of the two of the n-th and the (n + 1)th measurement electrodes; or
a function of calculating by software a differential signal between measured signals of the respective galvanometer circuits of the two of the n-th and the (n + 1)th measurement electrodes.

5. The fine particle classification measurement device according to claim 1, wherein
the attraction electrodes include a trap electrode disposed at the most upstream location, and one or more measurement electrodes disposed at locations downstream of the trap electrode, and
the measurement electrodes are reached by electrically-charged fine particles in particle size ranges respectively including predetermined particle sizes, and the trap electrode is reached by electrically-charged fine particles exceeding the particle size ranges, and by fine particles falling below the particle size ranges.

6. The fine particle classification measurement device according to any one of claims 1 to 5, wherein
the operation unit includes a number-of-particles computation unit for calculating the number of fine particles as a quantity of fine particles resulting from classification of the electrically-charged fine particles that have reached the measurement electrodes, and
the number-of-particles computation unit holds number-of-fine-particles calibration data representing a relationship between an amount of charge and the number of fine particles for each of the measurement electrodes, and calculates the number of fine particles of the electrically-charged fine particles that have respectively reached the measurement electrodes from the amounts of charge detected by the galvanometer circuits regarding the measurement electrodes based on the number-of-fine-particles calibration data.

7. The fine particle classification measurement device according to any one of claims 1 to 5, wherein
the operation unit includes a total surface area computation unit for calculating a total surface area as a quantity of fine particles resulting from classification of the electrically-charged fine particles that have reached the measurement electrodes, and
the total surface area computation unit holds total surface area calibration data representing a relationship between an amount of charge and the total surface area for each of the measurement electrodes, and calculates the total surface areas of the electrically-charged fine particles that have respectively reached the measurement electrodes from the amounts of charge detected by the galvanometer circuits regarding the measurement electrodes based on the total surface area calibration data.

8. The fine particle classification measurement device according to any one of claims 1 to 5, wherein
the operation unit includes a total weight computation unit for calculating a total weight as a quantity of fine particles resulting from classification of the electrically-charged fine particles that have reached the measurement electrodes, and
the total weight computation unit holds total weight calibration data representing a relationship between an amount of charge and the total surface area for each of the measurement electrodes, and calculates the total weight of the electrically-charged fine particles that have respectively reached the measurement electrodes from the amounts of charge detected by the galvanometer circuits regarding the measurement electrodes based on the total weight calibration data.

9. The fine particle classification measurement device according to any one of claims 6 to 8, further comprising:

a flowmeter configured to measure a sample gas flow rate, on the entrance side or on an exit side of the channel, wherein
the operation unit includes a concentration value computation unit configured to divide the number of fine particles, the total surface area, or the total weight calculated, by the sample gas flow rate measured by the flowmeter, to calculate a concentration value thereof.

10. The fine particle classification measurement device according to any one of claims 1 to 9, wherein
an electrification power source that applies a voltage to the discharge electrode of the electrifier can change the applied voltage, and
a classification particle size range of the electrically-charged fine particles reaching the same measurement electrode is changed by changing, by the electrification power source, an electric field intensity due to the discharge electrode.

11. The fine particle classification measurement device according to any one of claims 1 to 4 and claims 6 to 10, wherein
a classification particle size range measured by the same measurement electrode is changed by changing at least one of the locations of the measurement electrodes, the electrode width of the measurement electrodes, and the number of the measurement electrodes.

12. The fine particle classification measurement device according to claim 5, wherein
a classification particle size range measured by the same measurement electrode is changed by changing at least one of the locations of the measurement electrodes and the electrode widths of the measurement electrodes.

13. The fine particle classification measurement device according to any one of claims 1 to 12, wherein
a flow regulating valve is provided on a sample gas suction side of the blower mechanism, and
a classification particle size range of electrically-charged fine particles reaching the same measurement electrode is changed by adjusting the flow regulating valve to change a flow rate of the sample gas.

14. The fine particle classification measurement device according to any one of claims 1 to 13, wherein
a classification power source that applies a classification voltage to the classification electrode for generating an electric field that attracts the electrically-charged fine particles toward the attraction electrodes between the classification electrode and the attraction electrodes, can change a magnitude of the classification voltage, and
a classification particle size range of electrically-charged fine particles reaching the same measurement electrode is changed by changing the classification voltage.

15. A sample creation device comprising:

a parallel channel in which sample gas flowing inside can form a laminar flow;
a blower mechanism configured to suck the sample gas from an entrance of the channel, and driven under a condition where the sucked sample gas flows in the channel as the laminar flow;
an electrifier having a discharge electrode disposed on an entrance side of the channel, and configured to electrically charge fine particles in the sample gas;
an attraction electrode disposed downstream of the electrifier along a channel direction on one face of a pair of opposed faces of the channel, the attraction electrode having a surface that serves as a mounting surface for a sampling collection substrate; and
a classification electrode disposed on the other face of the pair of faces, facing the attraction electrode, the classification electrode being configured to generate, between the attraction electrode and the classification electrode, an electric field that attracts the electrically-charged particles in the sample gas flowing in the channel, toward the attraction electrode, to collect the electrically-charged particles on the sampling collection substrate.

16. A nanoparticle film forming device comprising:

a parallel channel in which sample gas flowing inside can form a laminar flow;
a blower mechanism configured to suck the sample gas from an entrance of the channel, and driven under a condition where the sucked sample gas flows in the channel as the laminar flow;
an electrifier having a discharge electrode disposed on an entrance side of the channel, and configured to electrically charge fine particles in the sample gas;
an attraction electrode disposed downstream of the electrifier along a channel direction on one face of a pair of opposed faces of the channel, the attraction electrode having a surface that serves as a mounting surface for a nanoparticle film forming substrate; and
a classification electrode disposed on the other face of the pair of faces, facing the attraction electrode, the classification electrode being configured to generate, between the attraction electrode and the classification electrode, an electric field that attracts the electrically-charged particles in the sample gas flowing in the channel, toward the attraction electrode, to deposit the electrically-charged particles on the nanoparticle film forming substrate.

# Fig. 1

Fig. 2

Fig. 3

# Fig. 4

# Fig. 5

# Fig. 6

# Fig. 7

# Fig. 8

Capture Ratio (−) vs. Particle Size (nm)

- b (Second Electrode (35.8−51.4mm))
- a (First Electrode (2.4−20.4mm))
- c (First − Second)

# Fig. 9

Capture Ratio (−) vs. Particle Size (nm)

- First Electrode (0−2.5mm)
- Second Electrode (2.5−9.7mm)
- Third Electrode (9.7−16.7mm)
- Fourth Electrode (16.7−23.9mm)
- Fifth Electrode (23.9−31.2mm)
- Sixth Electrode (31.2−38.4mm)
- Seventh Electrode (38.4−45.7mm)
- Eighth Electrode (45.7−52.9mm)

# Fig. 10

# Fig. 11A

# Fig. 11B

54

**Operation Unit**

Difference Operation Means

Particle Concentration Conversion Operation Means

Weight Concentration Conversion Operation Means

Surface Area Conversion Operation Means

28-1

Galvanometer Circuit

Galvanometer Circuit

28-2

55a

Display Unit

55b

Display Unit

# Fig. 12

17 Drive Circuit

32 Classification Power Source

21 Electrification Power Source

19 Flowmeter

15 14 Outlet

16

10

30

20

12

Inlet

22a

26a

24a

Galvanometer Circuit

28a

18

# Fig. 13

EP 2 860 510 A1

## Fig. 14

Wind Speed (m/sec) ∝ Number-of-Concentration Ratio

*(Top axis: 0, 0.2, 0.4, 0.6, 0.8, 1, 1.2)*

Vertical Distance at Classification Section Entrance (m):
4.0E-03, 3.5E-03, 3.0E-03, 2.5E-03, 2.0E-03, 1.5E-03, 1.0E-03, 5.0E-04, 0.0E+00

a (Wind Speed (m/sec) ∝ Number-of-Concentration Ratio)

50% Capture Range

Dpmax 400nm

Dpmax 9/16500nm

Dp50 23/4200nm

Dpmax 23/4200nm

Dp50 400nm

A

Horizontal Distance at Classification Section Entrance (m):
0.00, 0.02, 0.04, 0.06, 0.08

Trap Electrode Location

Current Detection Electrode Location

*(Enlarged view: top axis 0.E+00, 5.E-04, 1.E-03; left axis 6.E-07, 4.E-07, 2.E-07, 0.E+00; bottom axis 0.00, 0.01, 0.02)*

Dpmin 80nm

Enlarged View of Regeion A

# Fig. 15

# Fig. 16

Fig. 17

# Fig. 18

# Fig. 19A

# Fig. 19B

Electrification Power Source 21

20

32

Classification Power Source

24-1

30

24-2

24-3

24-4

24-5

24-6

11a

22

50

Pressure Sensor

26

First Electrode Amplifier — 28-1

Second Electrode Amplifier — 28-2

Third Electrode Amplifier — 28-3

Fourth Electrode Amplifier — 28-4

Fifth Electrode Amplifier — 28-5

Sixth Electrode Amplifier — 28-6

11b

Fig. 20

# Fig. 21

## INTERNATIONAL SEARCH REPORT

| International application No. |
|---|
| PCT/JP2013/065503 |

| A. CLASSIFICATION OF SUBJECT MATTER |
|---|
| G01N15/02(2006.01)i, G01N1/02(2006.01)i, G01N27/60(2006.01)i |

According to International Patent Classification (IPC) or to both national classification and IPC

**B. FIELDS SEARCHED**

Minimum documentation searched (classification system followed by classification symbols)
G01N15/02, G01N1/02, G01N27/60

Documentation searched other than minimum documentation to the extent that such documents are included in the fields searched

| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2008-102038 A (Matsushita Electric Works, Ltd.),<br>01 May 2008 (01.05.2008),<br>entire text; all drawings<br>(Family: none) | 1-3,5-16<br>4 |
| Y<br>A | JP 2005-091043 A (Horiba, Ltd.),<br>07 April 2005 (07.04.2005),<br>claim 1; paragraphs [0056], [0063]; fig. 1 to 3<br>(Family: none) | 1-3,5-16<br>4 |
| Y<br>A | JP 2006-300837 A (Matsushita Electric Works, Ltd.),<br>02 November 2006 (02.11.2006),<br>claim 1; paragraphs [0024] to [0094]; all drawings<br>(Family: none) | 2,3,5<br>4 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 June, 2013 (24.06.13) | 02 July, 2013 (02.07.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

41

**INTERNATIONAL SEARCH REPORT**

| International application No. |
|---|
| PCT/JP2013/065503 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 11-021677 A  (Director General, Agency of Industrial Science and Technology), 26 January 1999 (26.01.1999), paragraphs [0018] to [0034]; all drawings (Family: none) | 15,16 |
| A | JP 2008-102037 A  (Matsushita Electric Works, Ltd.), 01 May 2008 (01.05.2008), entire text; all drawings (Family: none) | 1-16 |
| A | JP 02-016445 A  (Duskin Co., Ltd.), 19 January 1990 (19.01.1990), entire text; all drawings (Family: none) | 1-16 |
| A | JP 55-078271 A  (Sen'ichi MASUDA), 12 June 1980 (12.06.1980), entire text; all drawings (Family: none) | 1-16 |
| A | US 2004/0080321 A1  (Kingsley St. John Reavell), 29 April 2004 (29.04.2004), entire text; all drawings (Family: none) | 1-16 |
| A | JP 2008-128739 A  (Isuzu Motors Ltd.), 05 June 2008 (05.06.2008), entire text; all drawings (Family: none) | 1-16 |
| A | JP 2003-337087 A  (Shimadzu Corp.), 28 November 2003 (28.11.2003), entire text; all drawings & US 2003/0213366 A1 | 1-16 |
| A | JP 07-256146 A  (Director General, Agency of Industrial Science and Technology), 09 October 1995 (09.10.1995), entire text; all drawings (Family: none) | 1-16 |
| A | JP 61-120651 A  (Mitsubishi Heavy Industries, Ltd.), 07 June 1986 (07.06.1986), entire text; all drawings & US 2010/0000863 A1    & EP 2141482 A1 | 1-16 |
| A | JP 2010-014614 A  (NGK Insulators, Ltd.), 21 January 2010 (21.01.2010), entire text; all drawings & US 2010/0000863 A1    & EP 2141482 A1 | 1-16 |

Form PCT/ISA/210 (continuation of second sheet) (July 2009)

**REFERENCES CITED IN THE DESCRIPTION**

**Patent documents cited in the description**

- US 20050162173 A
- US 6230572 B
- US 6828794 B
- US 6787763 B

**Non-patent literature cited in the description**

- **CHEN, D-R ; D. Y. H. PUI ; D. HUMMES ; H. FISSAN ; F. R. QUANT ; G. J. SEM.** Design and Evaluation of a Nanometer Aerosol Differential Mobility Analyzer (Nano-DMA). *Journal of Aerosol Science,* 1998, vol. 29/5, 497-509
- **FISSAN, H. J. ; C. HELSPER ; H. J. THIELEN.** Determination of Particle Size Distribution by Means of an Electrostatic Classifier. *Journal of Aerosol Science,* 1983, vol. 14, 354
- *Journal of the Society of Powder Technology, Japan,* 1985, vol. 22 (4), 231-244